# EUROPÄISCHE PATENTSCHRIFT

(11) **EP 2 673 309 B1**
(45) Veröffentlichungstag und Bekanntmachung des Hinweises auf die Patenterteilung: **18.03.2015**
(21) Anmeldenummer: 12702446.1
(22) Anmeldetag: 13.01.2012
(51) Int. Cl.: C08G 18/08, C08G 18/40

(54) **REAKTIVE SOLE UND VERFAHREN ZU IHRER HERSTELLUNG**
REACTIVE SOLS AND METHOD FOR PRODUCING THEM
SOLS RÉACTIFS ET LEURS PROCÉDÉS DE PRÉPARATION

(30) Priorität: 13.01.2011 DE 102011002651
(43) Veröffentlichungstag der Anmeldung: 18.12.2013
(73) Patentinhaber: Performance Chemicals Handels GmbH, 21244 Buchholz (DE)
(72) Erfinder: KLOCKEMANN, Werner, 21244 Buchholz (DE); HUNGER, Hans-Dieter, 16321 Bernau (DE)
(74) Vertreter: Gulde & Partner
(86) Internationale Anmeldenummer: PCT/EP2012/050492
(87) Internationale Veröffentlichungsnummer: WO 2012/095517

(56) Entgegenhaltungen:
- WO-A1-2009/098226
- DE-A1-102008 008 034
- DE-A1-102008 043 824

## Beschreibung

Diese Erfindung bezieht sich auf reaktive Sole und Verfahren zu ihrer Herstellung gemäß den Oberbegriffen der Ansprüche 1 und 16.

Das Sol ist dadurch gekennzeichnet, dass es mindestens ein Monomer und/oder mindestens ein Oligomer mit 2 bis 15 sich wiederholenden Struktureinheiten enthält, welche mindestens zwei funktionelle chemische Gruppen aufweisen sowie mindestens ein Interkalationsmittel ebenfalls mit mindestens zwei reaktionsfähigen chemischen Gruppen, wobei das Interkalationsmittel so ausgewählt ist, dass dessen funktionelle Gruppen nicht mit den funktionellen Gruppen des Monomers und/oder Oligomers reagieren.

Nach dem Stand der Technik bekannte Dispersionen in Wasser, in Lösungsmitteln oder Polyetheralkoholen zeichnen sich in der Regel durch Teilchengrößen von 100 nm bis weit über 1µm aus. So ist die Herstellung von Mikroemulsionen mit Teilchen, die über mehrere funktionelle Gruppen verfügen, bekannt. Solche Mikroemulsionen mit Teilchen von ca. 5 bis 100 µm Durchmesser werden z. B. aus bifunktionellen primären, ggf. N-oder S-haltigen Alkoholen und Diisocyanaten in höhermolekularen, ausschließlich sekundäre Hydroxylgruppen enthaltenden, flüssigen Polyadditions- oder Polykondensationsprodukten bei Temperaturen zwischen 60 und 80°C hergestellt. An Stelle der Alkohole können auch Verbindungen mit zwei primären oder sekundären Aminogruppen eingesetzt und auf diesem Wege dispergierte Polyharnstoffteilchen erhalten werden.

In US 2007/0238796 A1 ist die Herstellung stabiler Mikrodispersionspolyole beschrieben, wobei man die Polyole mit Polyisocyanat Polyadditionsprodukten dadurch erhält, dass eine oder mehrere Isocyanatkomponenten mit wenigstens einer eine Aminogruppe enthaltenden Verbindung, z. B. Aminen, Alkanolaminen oder Gemischen davon, sowie Polyetherpolyolen in Gegenwart von Harnstoff und Wasser umgesetzt werden. Der Harnstoff wirkt als Stabilisator für die Dispersion.

Da die Eigenschaften von polymeren Materialien nicht nur durch die Strukturbausteine der Makromoleküle bestimmt werden, sondern in einem hohen Maße durch Additive einschließlich reaktiver oder inerter Füllstoffe, wurde der Form und der Art dieser Füllstoffe große Aufmerksamkeit zuteil. So ist der Einsatz von Metalloxid-Nanopartikeln in Schaumstoffen in DE 10 2005 003 299 A1 beschrieben. Polyharnstoff-Dispersionspolyole können durch Depolymerisation von Poly(urethanharnstoffen), wie sie z. B. in Form von Polyurethan-Weichschaumstoffen vorliegen, erhalten werden (DE 10 2009 000604 A1). Durch Umsetzung der Poly(urethanharnstoffe) in einem oder mehreren Glykolen, ggf. unter Zusatz von Polyetheralkoholen, in Gegenwart von sekundären aliphatischen Aminen oder Polyaminen werden in den Polyetheralkoholen dispergierte Polyharnstoffpartikel erhalten.

Um jedoch eine hohe Wirkung von organischen Partikel zu erzielen, sind diskrete, vollständig solvatisierte Teilchen erforderlich, die frei in einem als Interkalationsmittel wirkenden Solvatationsmittel vorliegen und durch dieses voneinander segregiert sind, so dass keine Aggregation der diskreten Partikel erfolgen kann und diese durch das Solvatationsmittel interkaliert sind.

Aufgabe der Erfindung ist es deshalb, entsprechend reaktive Sole mit funktionalisierten interkalierten Partikeln bereitzustellen, die mittels eines einfachen Verfahrens herstellbar und die zu Endprodukten weiter verarbeitbar sind.

Die Lösung der Aufgabe erfolgt mit den Merkmalen der Ansprüche 1 und 16.

Vorteilhafte Weiterbildungen sind in den Unteransprüchen angegeben.

Demnach ist ein erfindungsgemäßes reaktives Sol, das eine flüssige Phase und nanoskalige Partikel mit funktionellen Gruppen enthält, dadurch gekennzeichnet, dass
die Partikel ein Maximum der Größenverteilung von < 50nm aufweisen und ein Partikel mindestens ein Monomer und/oder mindestens ein Oligomer mit 2 bis 15 sich wiederholenden Struktureinheiten enthält,
wobei das Monomer und/oder das Oligomer ein Addukt E aus einer Verbindung A,
ausgewählt aus einer der Gruppen von Diisocyanaten, Dicarbonsäuren, Diepoxyden und Phenole mit mindestens zwei A-Endgruppen und
einer Verbindung D,
ausgewählt aus einer der Gruppen von Diolen, Triolen, Diaminen, Triaminen, Polyaminen, Aldehyden oder von Gemischen aus diesen Verbindungen mit mindestens zwei D-Endgruppen, ist,
und die flüssige Phase eine als Interkalationsmittel wirkende Verbindung B, ausgewählt aus einer der Gruppen von Diolen, Triolen, Polyolen, Diaminen, Triaminen, Polyaminen, Aminoalkoholen, Dithiolen und Aldehyden mit mindestens zwei B-Endgruppen, enthält,
wobei die A-Endgruppen Carboxyl-, Epoxy-, Isocyanat-, Phenol-gruppen, die B-Endgruppen Hydroxyl-, Amino-, Aldehydgruppen und die D-Endgruppen Hydroxyl-, Amino-, Aldehydgruppen sind.

Das erfindungsgemäße Verfahren zur Herstellung eines reaktiven Sols durch Umsetzungen von Reaktanden mittels Additions-, Kondensations- oder Substitutionsreaktionen, ist dadurch gekennzeichnet, dass
eine Verbindung A,
ausgewählt aus einer der Gruppen von Diisocyanaten, Dicarbonsäuren, Diepoxyden und Phenole mit mindestens zwei A-Endgruppen und
eine Verbindung B,
ausgewählt aus einer der Gruppen von Diolen, Triolen, Polyolen, Diaminen, Triaminen, Polyaminen, Aminoalkoholen und Aldehyden mit mindestens zwei B-Endgruppen im Äquivalent-Verhältnis 1:10 bis 10:1 zwischen 0° und 250°C,
zu Monomeren und/oder Oligomeren C von der Art eines Urethans, Urethanharnstoffs, Harnstoffes, Resols, Resits, einer Mannichbase oder eines Esters und
zu der als Überschuss verbleibenden Verbindung A mit den A-Endgruppen oder der Verbindung B mit den B-Endgruppen umgesetzt werden,
wobei die A-Endgruppen Carboxyl-, Epoxy-, Isocyanat-, Phenol-gruppen und
die B-Endgruppen Hydroxyl-, Amino-, Aldehyd sind,
und
gleichzeitig mit oder nach Reaktionsbeginn
eine Verbindung D, ausgewählt aus der Gruppe von Diolen, Triolen, Diaminen, Triaminen, Polyaminen, Aldehyden oder von Gemischen aus diesen Verbindungen mit den D-Endgruppen Hydroxyl-, Amino- oder Aldehyd-Gruppen
zwischen 25 und 200°C mit den Monomeren und/oder Oligomeren C
zu einem Addukt E aus der Verbindung A und der Verbindung D
unter Freisetzung der Verbindung B aus den Monomeren und/oder Oligomeren C mit mindestens zwei B-Endgruppen
umgesetzt wird.

Dabei wird das Verfahren in erfindungsgemäßen Ausgestaltungen ein-, zwei- oder mehrstufig durchgeführt.

Eine Weiterbildung der Erfindung sieht vor, dass das Monomer und/oder das Oligomer Prepolymere sind.

Eine Ausgestaltung der Erfindung ist dadurch gekennzeichnet, dass reaktive Sol 15-80 Gew.-% Monomer und/oder Oligomer (Addukt E) und 85-20 Gew.-% der als Interkalationsmittel wirkende Verbindung B enthält.

In einer weiteren Ausgestaltung ist das Monomer und/oder Oligomer (Addukt E) ausgewählt aus der Gruppe bestehend aus hydroxylgruppenfunktionellen (-OH), aminogruppenfunktionellen (primär, sekundär, tertiär) und carboxygruppenfunktionellen (-COOH) Monomeren und/oder Oligomeren.

In einer weiteren Ausgestaltung sind die hydroxylgruppenfunktionellen Monomere und/oder Oligomere ausgewählt aus Esteralkoholen, Resolen, Resiten, Polyhydroxyalkanoaten oder Oligo(ω-hydroxyalkyl)terephthalaten, die aminogruppenfunktionellen Monomere oder Oligomere ausgewählt aus Oligoharnstoffen, Oligoesteramiden oder oligomeren Mannichbasen (ß-Aminoketone),
die carboxygruppenfunktionellen Monomere oder Oligomere ausgewählt aus Oligoadipinaten, Oligosebacaten, Oligoazelainaten, Oligosuccinaten, Oligophthalaten, Oligoterephthalaten, Oligoisophthalaten, Oligomesitylaten, Oligohydoxybutyraten, Oligohydroxyvaleraten, Oligohydroxypropionaten.

Eine Weiterbildung ist dadurch gekennzeichnet, dass die als Interkalationsmittel wirkende Verbindung B bis zu einer Konzentration von 80 Gew.-% an Monomeren und/oder Oligomeren (Addukt E) als ein Solvat mit diesen vorliegt.

In einer weiteren Ausgestaltung ist die als Interkalationsmittel wirkende Verbindung B ausgewählt aus Wasser, (mindestens 2 C)-Diolen, Triolen mit einer Molmasse von 62 bis 6000, Diaminen, Triaminen, Polyetheralkoholen, Polyesteralkoholen und/oder Poly(etheresteralkoholen), modifizierten nativen Ölen, Lactamen, Amiden, Thiolen.

Eine weitere Ausgestaltung sieht vor, dass mindestens ein organisches Lösungsmittel mit Heteroatomen enthalten ist, das zur Regulierung der Viskosität und/oder des Verlaufs bei Oberflächenbeschichtungen dient.

In einer weiteren Ausgestaltung ist mindestens ein OH-funktionelles oder NH2-funktionelles Monomer und/oder Oligomer in einem Interkalationsmittel/-gemisch in Form eines oder mehrerer Diole und/oder Triole mit Molmassen zwischen 62 und 6000 enthalten.

In einer Weiterbildung der Erfindung ist das OH-funktionelle Monomere und/oder Oligomere ausgewählt aus Terephthalaten, Phthalaten, Hydroxyalkanoaten und/oder ω-Hydroxy-alkyl-adipinaten der Molmasse 254 bis 2000, Resolen mit Molmassen zwischen 200 und 10.000 oder Resiten mit Molmassen zwischen 1000 und 10.000.

Eine weitere Ausgestaltung der Erfindung ist dadurch gekennzeichnet, dass das NH₂-funktionelle Monomere und/oder Oligomere ausgewählt ist aus aminogruppenhaltigen Oligoharnstoffen oder Mannichbasen mit Molmassen zwischen 200 und 10.000.

In einer weiteren Ausgestaltung ist ein NH₂-funktionelles Monomer und/oder Oligomer in einem Interkalationsmittel oder Interkalationsmittelgemisch in Form eines oder mehrerer Amine mit Molmassen zwischen 56 und 10.000 und/oder in ω-Amino-polyethern mit Molmassen zwischen 200 und 5000 enthalten.

In einer weiteren vorteilhaften Ausgestaltung enthält das reaktive Sol Katalysatoren, Stabilisatoren, Flammschutzmittel, organische Füllstoffe, anorganische Füllstoffe, exfolierte Schichtsilikate sowie nanoskalige Metalloxide, Metallhydroxyde und/oder Metall(oxid-hydroxide) der Erdalkalimetalle, der Erdmetalle, des Zinks, des Indiums, anderer seltener Erdmetalle oder deren Gemische.

Im reaktiven Sol liegt mindestens ein Mono- und/oder Oligomer als Nanopartikel mit einer Größe von 2 - 20 nm im Sol vor.

Bis zu 25 % des Oligomeren enthält in einer Weiterbildung ein oder mehrere Monomere.

In einer weiteren Ausgestaltung des erfindungsgemäßen Verfahrens wird zur Bildung weiterer und zusätzlicher Interkalationsmittel eine weitere Verbindung F mit mindestens zwei D-Endgruppen Hydroxyl-, Amino-, Phosphat- oder Carboxylgruppen hinzugefügt,
wobei beim Einsatz von Oligo- oder Polyestern als Verbindung F ein Diol oder eine Dicarbonsäure,
bei Einsatz von Urethan- bzw. Urethanhamstoff-Monomere und/oder -Oligomere als Verbindung F ein oder mehrere Diole, organische Phosphate, Amine, Diamine, Polyamine, Triole und/oder Thiole,
bei Einsatz von Resolen oder Resiten als Verbindung F ein oder mehrere Diole und/oder Phenole,
bei Einsatz von Mannichbasen als Verbindung F ein oder mehrere Diole, Amine, Diamine, Polyamine und/oder Triole eingesetzt werden.

Vorteilhafterweise erfolgt die Umsetzung in einem Extruder/Reaktionsextruder/ Mischerkneter als Einschrittverfahren in einem temperierbaren Reaktor.

Das erfindungsgemäße reaktive Sol wird bei der Herstellung von polymeren Beschichtungsmitteln, Klebstoffen, Elastomeren, Vergussmassen oder Formstoffen und zur Herstellung von Beschichtungen, Formgedächtnispolymeren, Kompositen, Verbundmaterialien, Mehrschichtmaterial, Elementen medizinischer Geräte, Prothetik und Elementen von Rehageräten verwendet.

Monomere und/oder Oligomere bilden in dem Interkalationsmittel so genannte funktionalisierte interkalierte organische Partikel. Bei den Partikeln handelt es sich um Teilchen, die zur Ausbildung zwischenmolekularer Bindungen und damit zu einer wie auch immer gearteten Weise der Zusammenlagerung fähig sind und die gegebenenfalls zumindest teilweise in Form von nanoskaligen Partikeln durch Laserlicht-Streuung nachgewiesen werden können. Als nanoskalige Partikel werden solche Partikel bezeichnet, die ein mit Laser-Lichtstreuung gemessenes Verteilungsmaximum von 1 bis 800 nm aufweisen.

Als organische, aggregationsfähige Partikel werden im Sinne der Erfindung Spezies verstanden, die fest, aber auch elastisch bis gelartig sein können, die eine Solvathülle ausbilden können und die im Interkalationsmittel solvatisiert vorliegen. Diese Spezies können mittels Laserlicht-Streuung nachgewiesen werden, aber sie können nicht generell mittels Laserlicht-Streuung nachgewiesen werden, sondern können auf Grund des Messprinzips bei der Messung auch "unsichtbar" bleiben. Diese Spezies schließen ebenfalls Monomere ein, die während eines der Herstellungsprozesse gebildet werden können.

Feste Partikel sind solche Teilchen, die bei Zimmertemperatur an sich fest und zumindest teilkristallin sind, d. h. eine Härte nach Mohs von 4 bis 10 aufweisen.

Unter elastischen Partikeln werden Formen verstanden, die bei Zimmertemperatur an sich gummielastisch und im Wesentlichen amorph sind, d. h. einen Glasübergang unterhalb Zimmertemperatur aufweisen.

Gelartige Partikel sind solche Teilchen, die bei Zimmertemperatur an sich gummielastisch und im wesentlichen amorph sind, d. h. einen Glasübergang unterhalb Zimmertemperatur aufweisen, auf Grund ihres niedrigen Molekulargewichts von 200 bis 5000 jedoch kein Elastomer sein können.

Unter "Solvatation" wird die Anlagerung von Lösemittel-Molekülen an gelöste Teilchen verstanden. Die dabei entstehenden "Komplexe" aus dem als Lösemittel fungierendem Interkalationsmittel und (solvatisierten) Teilchen heißen Solvate. Bei Wasser als Interkalationsmittel spricht man von Hydraten. Die Stabilität der Solvate ist abhängig von der Teilchengröße des gelösten Stoffes [je kleiner, desto besser solvatisiert].

"Sol" ist die Bezeichnung für eine kolloidale Lösung, in der ein fester oder flüssiger Stoff in feinster Verteilung in einem festen, flüssigen oder gasförmigen Medium dispergiert ist.

Als "Lösung" werden Mischungen von niedermolekularen funktionellen Monomeren und/oder Oligomeren in einer Flüssigkeit bezeichnet, die homogene Gemische darstellen und in denen die funktionellen Gruppen und/oder die Gesamtmoleküle der Monomeren und/oder Oligomeren im Sinne der Lösungstheorie mit einer Hülle aus der Flüssigkeit umgeben sind.

Als "kolloidale Lösungen" werden solche Mischungen bezeichnet, bei denen scheinbar eine Lösung vorliegt, aber mittels Tyndal-Effekt eine seitwärts gerichtete Lichtstreuung nachgewiesen werden kann.

Als "kolloidale Dispersionen" werden solche Mischungen bezeichnet, bei denen die dispergierten Teilchen unterhalb 1 µm groß sind und eine Solvathülle aufweisen, eine Inhomogenität für das menschliche Auge nicht erkennbar ist und mittels Tyndal-Effekt eine seitwärts gerichtete Lichtstreuung nachgewiesen werden kann.

Als "nanoskalige Dispersionen" werden solche Mischungen bezeichnet, bei denen die dispergierten Teilchen 1 bis 800 nm, vorzugsweise 1 bis 100 nm, groß sind, eine Solvathülle aufweisen können, eine Inhomogenität für das menschliche Auge nicht erkennbar ist und mittels Tyndal-Effekt keine seitwärts gerichtete Lichtstreuung nachgewiesen werden kann.

Erfindungsgemäß können die reaktiven Sole mit funktionalisierten interkalierten Partikeln durch eine ein-, zwei- oder mehrstufige Synthese hergestellt werden. Dabei wird ein Monomer und/oder Oligomer unter Bildung eines Interkalationsmittels oder Interkalations-mittelgemisch hergestellt.

Als "reaktives Sol" im Sinne der Erfindung werden solche Gemische bezeichnet, die aus mindestens einer Sorte funktionaler organischer, aggregationsfähiger Partikel bestehen, welche von Monomer und/oder Oligomer gebildet werden, und mindestens einer flüssigen Verbindung mit interkalierenden Eigenschaften, die ggf. eine Viskosität von 5 bis 20.000 mPas (25°C) aufweisen kann. Beide Spezies weisen mindestens zwei funktionale Endgruppen auf, wobei diese Gruppen jedoch nicht miteinander reagieren können.

Die Viskosität des Interkalationsmittels soll zwischen 5 mPas (25°C) und 10.000 mPas (25°C), vorzugsweise zwischen 15 mPas (25°C) und 4.000 mPas (25°C) liegen. Da die funktionalen organischen, aggregationsfähigen Partikel unterschiedliche Zustände aufweisen können, kann für diese keine allgemeine Viskosität bei Normalbedingungen angegeben werden. Erfindungsgemäß wird die Viskosität des Interkalationsmittels so auf die zu interkalierenden Verbindungen abgestimmt, dass das erfindungsgemäße Sol eine bevorzugte maximale Viskosität von 100.000 mPas (25°C) aufweist.

Die erfindungsgemäßen reaktiven Sole weisen einen Feststoffgehalt von ≥ 15 Gew.-% bis zu 70 Gew.-%, vorzugsweise von 15 bis zu 30 Gew. % auf. Unter Feststoffgehalt versteht man die Menge an Partikeln, die durch Entfernen der flüssigen Verbindung(en) (Interkalationsmittel und ggf. Zusätze) erhalten werden können.

Solche reaktiven Sole mit funktionalisierten interkalierten organischen Partikeln sind bisher nicht bekannt bzw. beschrieben worden.

In den als reaktives Sol bezeichneten Gemischen können die funktionalen Gruppen Hydroxylgruppen, Aminogruppen, Thiolgruppen, Carboxylgruppen, Isocyanatgruppen, Nitrilgruppen, Ketogruppen, Aldehydgruppen oder Cyanatgruppen sein, d. h. im wesentlichen solche Gruppen, die mindestens ein Heteroatom enthalten. Dabei ist eine Voraussetzung des erfindungsgemäßen Verfahrens und der erfindungsgemäßen Sole mit funktionalisierten interkalierten Partikeln, dass die im Sol vorliegenden Partikel und das Interkalationsmittel solche Gruppen aufweisen, die miteinander keine chemische Reaktion eingehen, da ansonsten das Sol instabil werden kann.

Als funktionale Partikel basierend auf Monomer und/oder Oligomer in den erfindungsgemäßen Solen können nun Verbindungen mit freien oder verkappten Hydroxylgruppen, Aminogruppen, Thiolgruppen, Carboxylgruppen, Isocyanatgruppen, Nitrilgruppen, Ketogruppen, Aldehydgruppen oder Cyanatgruppen eingesetzt werden oder sie werden in den Interkalationsmitteln gebildet.

Die Grundkörper (Monomer und Oligomer) der funktionalen Partikel können dabei aliphatischer oder aromatischer Natur sein. Diese Grundkörper können in Form von Monomeren oder in Form von Oligomeren mit zwischen den Monomeren eingefügten Gruppen sein, die sowohl reine Kohlenwasserstoffgruppen, z. B. Methylengruppen (-CH₂-), als auch auf Heteroatomen basierenden Gruppen sein können. Beispiele solcher Gruppen sind Ethergruppen (-O-), Estergruppen (-COO-), Urethangruppen (-NHCO-), Harnstoffgruppen (-NHCONH-), Mercaptogruppen (-S-), Ketogruppen (-C=O-) usw.

Bevorzugt werden erfindungsgemäß reaktive Sole zur Verfügung gestellt, bei denen die funktionellen, chemisch reaktive Gruppen des mindestens einen Monomers und/oder des mindestens einen Oligomers ausgewählt sind aus der Gruppe -OH, -COOH, -SH, - NHR und/oder -NH₂, die funktionellen chemisch reaktiven Gruppen des mindestens einen Interkalationsmittels ausgewählt sind aus der Gruppe -OH, -NH₂, -SH, -NHR.

Die Zusammensetzung des reaktiven Sols aus den funktionalen Partikeln und dem/den Interkalationsmittel/n kann in weiten Grenzen variiert werden. Diese erfindungsgemäßen reaktiven Sole enthalten demzufolge 5-80 Gew.-% Monomer und/oder Oligomer als funktionale Partikel und 95-20 Gew.-% Interkalationsmittel.

In einer Ausführungsform der erfindungsgemäßen reaktiven Sole sind die funktionalen Partikel ausgewählt aus hydroxylgruppenfunktionellen Monomeren und Oligomeren, aminogruppenfunktionellen Monomeren und Oligomeren, thiolfunktionellen Monomeren und Oligomeren oder carboxygruppenfunktionellen Monomeren und Oligomeren.

Als Monomere werden vorzugsweise solche Verbindungen eingesetzt, die mindestens zwei funktionelle Gruppen aufweisen und in dem Interkalationsmittel teilweise oder konzentrationsabhängig unlöslich sind.

Die Monomeren und/oder Oligomeren werden bevorzugt aus der Gruppe bestehend aus hydroxylgruppenfunktionellen (OH), aminogruppenfunktionellen (NH₂) und carboxygruppenfunktionellen (COOH) Monomeren oder Oligomeren ausgewählt.

Die hydroxylgruppenfunktionellen Monomere oder Oligomere können ausgewählt werden z.B. aus Esteralkoholen, Resolen, Resiten, Polyhydroxyalkanoaten oder Oligoterephthalaten bzw. Oligo(ω-hydroxy-alkyl)terephthalaten.

Die aminogruppenfunktionellen Monomere oder Oligomere können ausgewählt werden z. B. aus Oligoharnstoffen, Oligoesteramiden oder oligomeren Mannichbasen (ß-Aminoketone).

Carboxygruppenfunktionelle Monomere oder Oligomere werden bevorzugt ausgewählt aus Oligoadipinaten, Oligosebacaten, Oligoazelainaten, Oligosuccinaten, Oligophthalaten, Oligoterephthalaten, Oligoisophthalaten, Oligomesitylaten, Oligohydoxybutyraten, Oligohydroxyvaleraten und Oligohydroxypropionaten.

Erfindungsgemäß sind die im reaktiven Sol enthaltenen Interkalationsmittel solche Verbindungen, die eine Solvatation der Monomeren und Polymeren als funktionale Partikel zu einem Sol darzustellen erlauben. Die Interkalationsmittel sind in der Regel Verbindungen, die vorzugsweise bis zu einer Konzentration von 80 Gew.-% an Monomeren und/oder Oligomeren ein Solvat mit diesen bilden.

Sie werden bevorzugt ausgewählt aus der Gruppe bestehend aus Wasser, (mindestens 2 C)-Diolen, Triolen mit einer Molmasse von 92 bis 6000, Diaminen, Aminoalkoholen, alkoxylierten Di- oder Polyaminen, Triaminen, Polyetheralkoholen, Polyesteralkoholen und/oder Poly(ether-esteralkoholen), modifizierten nativen Ölen, Lactamen, Amiden und Thiolen. Die reaktiven Sole können neben dem Interkalationsmittel mindestens ein organisches Lösungsmittel mit Heteroatomen aufweisen, das zur Regulierung der Viskosität und des Verlaufs bei Oberflächenbeschichtungen dient.

(Mindestens 2-C)-Diole sind z.B. ausgewählt aus der Gruppe bestehend aus Ethylenglykol, Diethylenglykol, Triethylenglykol, Tetraethylenglykol, Pentaethylenglykol, Hexaethylenglykol, höheren Ethylenglykolen oder deren Gemischen, Propylenglykol-1,2 oder -1,3, Dipropylenglykol, Tripropylenglykol, höhere Propylenglykole bis zu einer Molmasse von 4000, Copolyetheralkohole aus Ethylenoxid und Propylenoxid mit Molmassen bis 5000, Polytetramethylenglykole der Molmasse 200 bis 6000, Butandiol-1,4 oder -1,3, Polycaprolactondiole der Molmasse 400 bis 8000, Pentan-1,5-diol, Hexan-1,6-diol, Octan-1,8-diol.

Triole mit einer Molmasse von 92 bis 6000 sind z.B. ausgewählt aus Glycerin, Octantriol-1,3,8, Hexantriol-1,3,6 oder ihren Homologen, Trimethylolpropan, Glycerin-Propylenoxid-Addukte der Molmasse 260 bis 4000, Glycerin-Propylenoxid-Ethylenoxid-Addukte der Molmasse 400 bis 8000, Trimethylolpropan-Propylenoxid-Addukte der Molmasse 260 bis 4000, Trimethylolpropan-Propylenoxid- Ethylenoxid-Addukte der Molmasse 400 bis 8000.

Diamine sind z.B. ausgewählt aus Ethylendiamin, Propylendiamin, Butan-1,4-diamin, Hexan-1,4-diamin, Piperazin, N-Methylpiperazin, N-(2-N-Methylaminoethyl)piperazin, N-Ethyl-cyclohexan-amin, Piperidin, Imidazolidin.

Triamine sind z.B. ausgewählt aus Diethylentriamin, Dipropylentriamin, Dibutylentriamin, Hexahydrotriazin, 2,4,6-Triaminophenol.

Polyetheralkohole sind z. B. ausgewählt aus siehe oben unter Diol und Triol.

Polyesteralkohole sind z.B. ausgewählt aus Adipinsäure-Ethylenglykol-Kondensaten der Molmasse 400 bis 2000, Adipinsäure-Diethylenglykol- Kondensaten der Molmasse 400 bis 2000, Adipinsäure-Diethylenglykol-Hexandiol-Kondensaten der Molmasse 400 bis 2000, Adipinsäure-Neopentylglykol- Kondensaten der Molmasse 400 bis 2000, Adipinsäure-Neopentylglykol-Glycerin-Kondensaten der Molmasse 400 bis 1000, Adipinsäure-Neopentylglykol-Trimethylolpropan-Kondensaten der Molmasse 400 bis 1000, Adipinsäure-Neopentylglykol-Pentaerythrit-Kondensaten der Molmasse 400 bis 1000, Phthalsäure-Diethylenglykol-Kondensaten der Molmasse 260 bis 1000, Phthalsäure-Tetraethylenglykol-Kondensaten der Molmasse 300 bis 1000, Isophthalsäure-Diethylenglykol-Kondensaten der Molmasse 260 bis 1000, Terephthalsäure-Diethylenglykol-Kondensaten der Molmasse 260 bis 2000, Terephthalsäure-Diethylenglykol-Glycerin-Kondensaten der Molmasse 260 bis 2000, Terephthalsäure-Adipinsäure-Diethylenglykol-Glycerin-Kondensaten der Molmasse 260 bis 2000, Terephthalsäure-Adipinsäure-Ethylenglykol-Glycerin-Kondensaten der Molmasse 260 bis 2000, Terephthalsäure-Adipinsäure-Diethylenglykol-Octandiol-Kondensaten der Molmasse 260 bis 2000, Terephthalsäure-Adipinsäure-2-Ethyl-1,3-hexandiol-Glycerin-Kondensaten der Molmasse 260 bis 2000.

Poly(ether-esteralkoholen) sind z.B. ausgewählt aus Terephthalsäure-Diethylenglykol-Kondensaten der Molmasse 260 bis 2000, Terephthalsäure-Polyethylenglykol-Kondensaten der Molmasse 260 bis 3000, Terephthalsäure-Polypropylenglykol-Kondensaten der Molmasse 260 bis 3000.

Modifizierte native Öle sind z.B. ausgewählt aus epoxydiertem Sojaöl, epoxydiertem Ricinusöl, luftoxydiertem Rapsöl, luftoxydiertem Fischöl, sulfoniertem Rapsöl, sulfoniertem Kokosöl.

Lactame sind z. B: ausgewählt aus Caprolactam.

Amide sind z. B. ausgewählt aus Dimethylformamid, Diethylformamid, Hexamethylphosphorsäuretriamid, Diethylaminoethylphosphonsäurediethylester, Aminophosphonsäure-bis(2-hydroxyethyl)ester.

Thiole sind SH-Gruppen haltige, aliphatische oder aromatische Verbindungen einschließlich Bis-, Tris- oder Tetrakis-thiolalkylenester von Dicarbonsäuren.

Organische Lösungsmittel mit Heteroatomen sind z. B. ausgewählt aus Dimethylsulfoxid, Dimethylformamid, Cyclohexanon, 3,5-Dialkylphenoloxyethylenether, Alkoxyphenolen, Dibutyl-ether, Dioxan.

Bei höherer Anzahl von wiederkehrenden Struktureinheiten im Interkalationsmittel sinkt die solvatisierbare Menge weiter, so dass das erfindungsgemäße reaktive Sol z. B. als Solvat in Form eines Gemisches aus Sol, Lösung, kolloidaler Lösung, kolloidaler Dispersion und nanoskaliger Dispersion vorliegt. Diese unterschiedlichen Solvatations/Dispersionsverhältnisse sind ebenfalls Bestandteil eines erfindungsgemäßen reaktiven Sols.

Insbesondere sind erfindungsgemäße reaktive Sole solche, die mindestens ein OH-funktionelles oder NH₂-funktionelles Monomer oder Oligomer in einem Interkalationsmittel/-gemisch in Form eines oder mehrerer Diole und/oder Triole mit Molmassen zwischen 64 und 6000 enthalten. Dabei wird das OH-funktionelle Monomere oder Oligomere ausgewählt aus Terephthalaten, Phthalaten, Hydroxyalkanoaten und/oder w-Hydroxyalkyladipinaten der Molmasse 254 bis 2000, Resolen mit Molmassen zwischen 200 und 10.000 oder Resiten mit Molmassen zwischen 1000 und 10.000. Das NH₂-funktionelle Monomere oder Oligomere wird ausgewählt aus aminogruppenhaltigen Oligoharnstoffen oder Mannichbasen mit Molmassen zwischen 200 und 10.000.

Eine spezielle Variante der erfindungsgemäßen reaktiven Sole sind solche, die ein NH₂-funktionelles Monomeres oder Oligomeres in einem Interkalationsmittel oder -gemisch in Form eines oder mehrerer Amine mit Molmassen zwischen 56 und 10.000 und/oder in ω-Amino-polyethern mit Molmassen zwischen 200 und 5000 enthalten.

Mit Hilfe dieser Additiven können die Eigenschaften der reaktiven Sole vorteilhafterweise weiter auf die speziell geforderten Eigenschaften eingestellt werden. Insbesondere nanoskalige anorganische Füllstoffe tragen dazu bei, dass bereits bei sehr niedrigen Konzentrationen, z. B. unter 5 Gew.-%, ganz andere Eigenschaften erzielt werden können. So kann z. B. durch die Metalloxide die Leitfähigkeit oder durch Siliciumcarbid die Wärmeleitfähigkeit wesentlich erhöht werden. Weiterhin können exfolierte Graphite zur Erhöhung der Intumeszenzwirkung im Sinne des Flammschutzes eingesetzt werden. Außerdem erlaubt der Einsatz von nanoskaligen Metalloxiden oder -hydroxiden bereits bei niedrigen Konzentrationen eine wesentliche Erhöhung der Flammfestigkeit.

Katalysatoren sind z.B. ausgewählt aus tertiären Aminen, metallorganischen Verbindungen, Aminoalkoholen, Lewis-Säuren, Lewis-Basen, Mineralsäuren, Alkali- oder Erdalkalihydroxiden oder -carboxylaten.

Stabilisatoren sind z.B. ausgewählt aus Alkylsulfonaten, Alkalisalzen von Alkylsulfonaten, epoxydierten Ölen, Silikonen, organischen Silikaten, Alkylsiliziumpolyetheralkoholen, Polyethersilanolen, Silazanen, Hexamethyldisilazan, Bis-aromatischen Carbodiimiden wie 3,5-Bis-(diisopropylphenyl)carbodiimid, Stilbenderivaten, Titandioxid, Thiazolen, Benzthiazolen, Alkyl imidazolen, Alkylthiadiazolen, Bis-(Dialkylaminoalkyl)piperazinen.

Flammschutzmittel sind z. B. ausgewählt aus phosphororganischen Verbindungen wie Triphenylphosphat, Triphenylphosphit, Trikresylphosphat, Tris(2-chlorethyl)phosphat, Tris-(2,3-dibromphenyl)phosphat, Tris(2-chlorpropyl)phosphat, rotem Phosphor, Ammoniumpolyphosphaten, Ammoniumpolyphosphat II, Aluminiumhydroxid, Aluminiumoxidhydrat, Magnesiumhydroxid, Magnesiumoxid, Antimontrioxid, Graphit, Blähgraphit, Blähton, nanoskaligem Montmorrolinit, oberflächenmodifizierten Schichtsilikaten, Böhmit, Dekabrompiphenyl, Octabrombiphenylether, Pentabrombiphenylether, Melamin, Melamincyanurat.

Organische Füllstoffe sind z. B. ausgewählt aus Cellulosefasern, mikrokristalliner Cellulose, Regeneratcellulosefasern, Lignin, Ligninsulfonate, Holzmehl, Holzfasern, Naturfasern wie Hanf, Sisal, Flachs o. ä., natürliche Öle, Silsesquioxane.

Anorganische Füllstoffe sind z. B. ausgewählt aus Talkum, Kreide, Bariumsulfat (Schwerspat), Gesteinsmehl, Porzellanmehl, Titandioxid, Aluminiumoxid, Zinkoxid, Glasfasern, Glasmehl, Blähglas, Graphit, Eisenoxide, Cadmiumsulfid, Cadmiumselenid,, Kohlenstofffasern, Kohlenstoffnanofasern (carbon nano tubes), Silberpulver.

Exfolierte Schichtsilikate sind z. B. ausgewählt aus Montmorillonit, Laponit, Cloisite.

Nanoskalige Metalloxide, Metallhydroxide und/oder Metall(oxid-hydroxide) der Erdalkalimetalle, der Erdmetalle, des Zinks, des Indiums, anderer seltener Erdmetalle z.B. ausgewählt aus Aluminiumhydroxid, Aluminiumoxidhydroxid, Magnesiumhydroxid, Yttriumoxid, Indiumhydroxid, Zinkindiumhydroxid, Zinkindiumhydroxidoxid, dazu Eisenoxid, Eisenoxidhydroxid, Eisen-II-hydroxid.

Die erfindungsgemäßen Sole werden mittels einer Ein- oder Zwei-Stufen-Reaktion kontinuierlich oder diskontinuierlich hergestellt. Bevorzugte Verfahren sind in den Beispielen näher beschrieben.

Die funktionalen Partikel sind dabei bis zu 80 Gew.-%, vorzugsweise bis zu 30 Gew.-%, in dem Interkalationsmittel oder -gemisch enthalten. Da diese funktionalen Partikel in Abhängigkeit von ihrer Struktur und Zusammensetzung unterschiedliche Solvatationsradien aufweisen können, ist die Messung mit den herkömmlichen Laserlicht-Streuungs-Geräten problematisch und kann zu völlig irreführenden Ergebnissen führen. So wurden z. B. an solchen erfindungsgemäßen Solen Messungen mit der Laserlicht-Streuung mittels NANOFOXX durchgeführt, bei denen das solvatisierte Monomer eine Molekülgröße von 3,2 nm aufweist. Durch die Messung wurde ein Wert von 1,2 nm bestimmt (eigene Ergebnisse). Im Gegensatz dazu stehen Untersuchungen aus der Literatur, die für Kristalle z. B. aus Tris-(4,4'-diaminodiphenylmethan) und Natriumchlorid Molekülgrößen über 18 nm angeben (J. W. Swardstrom, L. A. Duvall, D. P. Miller, The Crystal and Molecular Structure of Tris-(4,4'-diaminodiphenylmethane)-Sodium Chloride, Acta Cryst. **B28,** 2510-2514 (1972)).

An einem weiteren erfindungsgemäßen Sol, dessen Oligomer eine Molmasse von 812 aufwies und dessen Moleküllänge auf der Basis seiner Struktur 14,1 nm betragen soll, wurde mittels Laserlicht-Streuung (NANOFOXX) ein Wert von über 80 nm als Maximum bestimmt. Die Angabe von Teilchengrößen, die durch Laserlicht-Streuung bestimmt werden, ist demzufolge nur zum Teil aussagekräftig, da in den Solen die Solvatationsbedingungen die Messdaten bestimmen.

Die Größe des durch Laserlicht-Streuung messbaren Anteils der funktionalen Partikel liegt in den erfindungsgemäßen Solen bevorzugt im Bereich von 1 nm bis 800 nm, vorzugsweise bei 1 bis 400 nm, besonders bevorzugt bei 1 bis 50 nm. Ganz besonders bevorzugte Sole weisen mindestens ein Mono- und/oder Oligomer als Nanopartikel mit einer Größe von 2 - 20 nm im Sol auf.

Diese Werte sind jedoch nicht charakterisierender Bestandteil der Erfindung, wie vorstehend ausgeführt.

Beispielhaft sei ein reaktives Sol durch Lösung/Dispergierung von Bis-(2-hydroxyethyl)terephthalat in Diethylenglykol genannt, wobei die funktionelle Verbindung nur zu einem geringen Anteil gelöst, zu einem größeren solvatisiert ist. Auf Grund der molekularen Größe der Verbindungen weisen die dispergierten Teilchen in der Regel Dimensionen über 1 nm auf, in dem genannten Beispiel wird die Molekülgröße mit 1,7 nm angegeben.

Als Oligomere werden Verbindungen bezeichnet, die mindestens zwei und höchstens 15 wiederkehrende Struktureinheiten aufweisen. Als Beispiel sei wiederum ein Terephthalsäureester genannt, der auf der Basis von Diethylenglykol und Terephthalsäure hergestellt wird und durch die Strukrurformel 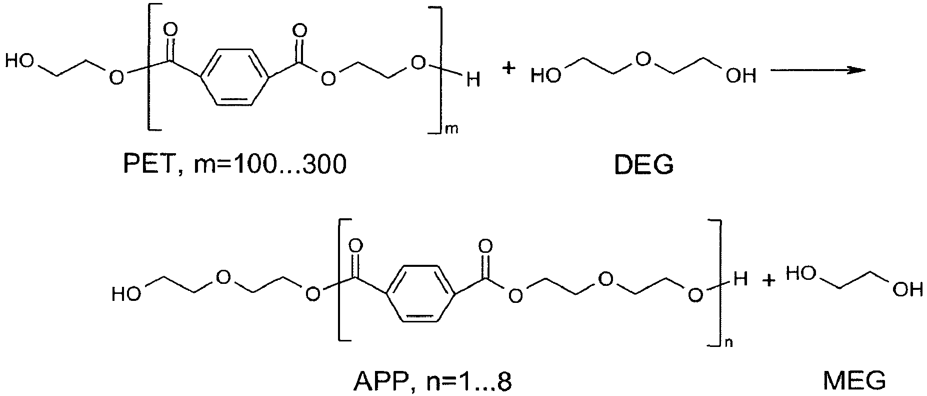 charakterisiert wird. Während das Monomere Bis-(ω-hydroxy-ethoxy-ethyl-)terephthalat in niedermolekularen Diolen noch bis zu Konzentrationen von etwa 12 % solvatisiert werden kann, entsteht darüber eine kolloidale Lösung, die einen deutlichen Tyndall-Effekt zeigt. Das Oligomere mit n = 2 kann bis zu etwa 14 % solvatisiert werden, ohne dass ein nachweislicher Tyndall-Effekt zu beobachten ist.

Die Herstellung der funktionalen Sole mit funktionalisierten Partikeln erfolgt erfindungsgemäß weiterhin dadurch, dass die als Ausgangstoffe eingesetzten höhermolekularen Oligomere und/oder Polymere über die Herstellung eines Prepolymeren gewonnen werden, das durch Umsetzung von mindestens zwei Monomeren mit miteinander reaktionsfähigen chemischen Gruppen erhalten wird.

Ein Prepolymer wird z. B. aus mindestens einem Diol und/oder Polyetheralkohol und mindestens einem Di- und/oder Polyisocyanat hergestellt.

Diole sind z.B. ausgewählt aus Ethylenglykol, Diethylenglykol, Triethylenglykol, Tetraethylenglykol, Pentaethylenglykol, Hexaethylenglykol, höheren Ethylenglykolen oder deren Gemischen, Propylenglykol-1,2 oder -1,3, Dipropylenglykol, Tripropylenglykol, höhere Propylenglykole bis zu einer Molmasse von 4000, Copolyetheralkohole aus Ethylenoxid und Propylenoxid mit Molmassen bis 5000, Polytetramethylenglykole der Molmasse 200 bis 6000, Butandiol-1,4 oder -1,3, Polycaprolactondiole der Molmasse 400 bis 8000, Pentan-1,5-diol, Hexan-1,6-diol, Octan-1,8-diol.

Polyetheralkohol sind z.B. ausgewählt aus Glycerin-Propylenoxid-Addukte der Molmasse 260 bis 4000, Glycerin-Propylenoxid-Ethylenoxid-Addukte der Molmasse 400 bis 8000, Trimethylolpropan-Propylenoxid-Addukte der Molmasse 260 bis 4000, Trimethylolpropan-Propylenoxid- Ethylenoxid-Addukte der Molmasse 400 bis 8000.

Di- und/oder Polyisocyanat sind z.B. ausgewählt aus 4,4'-Diphenylmethandiisocyanat, Toluylen-2,4-diisocyanat, Toluylen-2,6-diisocyanhat, Hexamethylendiisocyanat, Isophorondiisocyanat, 4,4'-Dicyclohexylmethandiisocyanat, 2,4-Xylylendiisocyanat, 2,6-Xylylendiisocyanat, Hexamethylendiisocyanat-Biuret, trimeres Toluylendiisocyanat, polymeres 4,4'-Diphenylmethandiisocyanat.

Diese Prepolymere werden mit Aminen im Sinne einer Amidierung der Carbaminsäureestergruppe (Substitutionsreaktion) umgesetzt. Diese Umsetzung ist eine bisher wenig untersuchte Reaktion, deren Geschwindigkeit von der Art des zur Amidierung eingesetzten Amins und seiner Basizität bestimmt wird.

Zur Amidierung der Carbaminsäureester werden Amine verwendet, die z. B. ausgewählt sind aus Di-n-butylamin, Di-n-hexylamin, N-Methyl-N-hexylamin, N-Methylbenzylamin, Diethylentriamin,. Ethylendiamin, Triethylentetramin, Dipropylentriamin, Tripropylentetramin, Piperazin, N-ethyl-N'-ethyl-piperazin, Morpholin, Piperidin, Imidozolidin, Diethylamin.

In einer besonderen Ausgestaltung der Erfindung werden die reaktiven Sole durch den gezielten Aufbau von funktionalen Partikeln im Interkalationsmittel gewonnen. Das erfolgt durch
- eine Synthese von Oligomeren mit Gruppen, die einer Umsetzung durch geeignete Reagenzien leicht zugänglich sind, und Struktureinheiten, die die Solvatisierung der funktionalen Partikel unterstützen und für die nachfolgende Verwendung zur Herstellung von Endprodukten gezielt deren Eigenschaften mitbestimmen und
- der auf die Umsetzung der geeigneten Gruppen gerichteten weiteren Umsetzung mit Reagenzien, die wiederum eine Mehrzahl von funktionellen Gruppen aufweisen, von denen ein Teil zur Substitution und ein weiterer Teil zu ihrer Funktionalisierung verwendet werden.

So können bei der Synthese bereits die Folgeschritte und die zu erzielenden Eigenschaften der funktionalen Partikel sowie der daraus herzustellenden Endprodukte vorgegeben und durch die Struktur der Bausteine berücksichtigt werden. Die Auswahl der eingesetzten Monomeren, Oligomeren und Interkalationsmittel erfolgt derart, dass
- die erzeugten funktionalen Partikel in den Interkalationsmitteln dauerhaft stabil solvatisiert sind,
- die erzeugten funktionalen Partikel eine sehr enge Teilchengrößenverteilung aufweisen,
- die funktionalen Partikel durch die Art der eingesetzten Verbindungen und deren Anzahl vorhergestimmte Eigenschaften der Endprodukte ergeben,
- die funktionalen Partikel durch die Art der eingesetzten Verbindungen eine vorherbestimmte Zahl von funktionellen Gruppen aufweisen und
- durch die Menge der eingesetzten spaltbaren Monomeren und/oder Oligomeren die Menge und die Größe der funktionalen Partikel im Sol eingestellt wird,
- durch die Menge der eingesetzten spaltbaren Monomeren und/oder Oligomeren die Stabilität des Sols durch die freigesetzten Monomeren und/oder Oligomeren hergestellt wird.

Die Reaktionsbedingungen zur Durchführung des erfindungsgemäßen Verfahrens können in weiten Grenzen in Abhängigkeit von der Art und Menge der Monomere und Oligomere, die die funktionalen Partikel bilden, und des Interkalationsmittels eingestellt werden. Typischerweise erfolgt die Herstellung des Sols bei Temperaturen zwischen 40°C und 250°C innerhalb von 10 Minuten bis 24 Stunden.

Vorzugsweise wird für die erste Stufe ein Temperaturbereich von 40 bis 250°C gewählt. Bei Verwendung von z. B. Mannichbasen liegt er z. B. zwischen 30 und 80°C, von urethangruppenhaltigen Produkten liegt dieser vorzugsweise im unteren Bereich von 40 bis 200°C, bei Verwendung von Resolen vorzugsweise im mittleren Bereich von 100 bis 220°C, und bei Oligoestern vorzugsweise im oberen Bereich von 180 bis 250°C, liegen. Für die zweite, ggf. simultan auszuführende Stufe wird ein Temperaturbereich von vorzugsweise 60 bis 240°C gewählt. Dabei wird dieser auf die Natur und die Eigenschaften der umzusetzenden Bindungen eingestellt.

Beispielhaft für geeignete Monomer- bzw. Oligomerbausteine, die solvatisiert werden, seien folgende genannt:
- Esteralkohole, vorzugsweise Bis-(2-hydroxyethyl)terephthalsäureester, Bis-(2-hydroxyethyl-ethoxy)terephthalsäureester, Bis-(2-hydroxyethyl) phthalsäureester, Bis-(2-hydroxy-ethyl-ethoxy)phthalsäureester, Bis-(2-hydroxyethyl-ethoxy)isophthalsäureester und Bis-(2-hydroxyethyl-ethoxy)1,5-naphtylendicarbonsäureester,
- Esteramide, vorzugsweise Bis-(2-aminoethyl)terephthalsäurediamid, Bis-(2-aminoethyl)phthal-säurediamid, Bis-(2-aminopropyl-N-methyl-N-propyl)terephthalsäurediamid, Bis-(2-aminopropyl-N-methyl-N-propyl)phthalsäurediamid, Bis-(2-aminopropyl-N-methyl-N-propyl)isophthalsäurediamid, Bis-(2-aminoethyl)adipinsäurediamid, Bis-(2-amino-propyl-N-methyl-N-propyl)apidinsäurediamid, deren Oligomere mit bis zu zwölf wiederkehrenden Struktureinheiten oder deren Gemische,
- Harnstoffe, vorzugsweise N,N'-Bis-(4-amino-diphenylmethyl)harnstoff, Bis-([4-amino-propyl-N-methyl-N-propylen-ureyl]diphenylmethyl)harnstoff, Bis-(4-amino-2-methyl-phenyl)harnstoff, Bis-(2-amino-4-methylphenyl)harnstoff, Bis-(4-amino-dicyclohexyl-methyl)harnstoff, Bis-([4-amino-propyl-N-methyl-N-propylen-ureyl] dicyclohexylmethyl)harnstoff, Bis-([4-amino-ethyl-N-ethylen-ureyl]diphenylmethyl)harnstoff, Bis-([4-amino-pro-yl-N-propylen-ureyl]diphenylmethyl)harnstoff, Bis-([4-amino-ethylen-ureyl]diphenyl-thyl)harnstoff, deren Oligomere mit bis zu zwölf wiederkehrenden Struktureinheiten oder deren Gemische,
- Resole, vorzugsweise Bis-(4-hydroxymethyl-phenyl)methylen, deren Oligomere mit bis zu zwölf wiederkehrenden Struktureinheiten oder deren Gemische,
- Resite, vorzugsweise Bis-(4-hydroxymethyl-phenyl)methylen, deren Oligomere mit bis zu zwölf wiederkehrenden Struktureinheiten oder deren Gemische,
- Polyoxymethylene mit bis zu zwölf wiederkehrenden Struktureinheiten oder deren Gemische,
- Bis-(2-hydroxyethyl)terephthalat und seine Oligomeren mit bis zu zwölf wiederkehrenden Struktureinheiten oder deren Gemische,
- Bis-(ω-hydroxy-ethoxy-ethyl-)terephthalat und seine Oligomeren mit bis zu zwölf wiederkehrenden Struktureinheiten oder deren Gemische,
- Bis-(2-hydroxyethyl)adipinat und seine Oligomeren mit bis zu zwölf wiederkehrenden Struktureinheiten oder deren Gemische,
- Bis-(ω-hydroxy-ethoxy-ethyl)adipinat und seine Oligomeren mit bis zu zwölf wiederkehrenden Struktureinheiten oder deren Gemische,
- Bis-(4-hydroxybutyl)adipinat und seine Oligomeren mit bis zu zwölf wiederkehrenden Struktureinheiten oder deren Gemische,
- Bis-(6-hydroxyhexyl)adipinat und seine Oligomeren mit bis zu zwölf wiederkehrenden Struktureinheiten oder deren Gemische,
- Bis-(2-ethyl-1-hydroxy-hexyl)terephthalat und seine Oligomeren mit bis zu vier wiederkehrenden Struktureinheiten oder deren Gemische,
- 1-Oxy-2-methylen-(N,N-bis-2-hydroxyethylamino)4-tert.-butyl-benzol.

Interkalationsmittel können z. B. sein:
- einfache chemische Verbindungen mit mindestens einem Sauerstoff- und/oder Stickstoffatom im Molekül, z. B. Cyclohexanon, Tetrahydrofuran, Di-n-butylether, Dimethylformamid, Dimethylacetamid, Dimethylsulfoxid,
- längerkettige Polyether- und/oder Polyester- und/oder Poly(etherester), z. B. Diethylenglykol, Triethylenglykol, Polyethylenglykole der Molmasse 200 bis 6000, Dipropylenglykol, Tripropylenglykol, Polypropylenglykole der Molmasse 200 bis 3000, Poly(propylen-ethylen)copolyetheralkohole der Molmasse 400 bis 6000, Polypropylen-ethertriole auf Basis Glycerin oder Trimethylolpropan der Molmasse 200 bis 5000, Poly(propylen-ethylen)copolyethertriole der Molmasse 400 bis 8000, Polyetherester auf der Basis Adipinsäure, Phthalsäure, Isophthalsäure, Terephthalsäure, Sebacinsäure, Azelainsäure usw. und Propylenoxid- bzw. Propylenoxid-Ethylenoxid-Copolymer-Blöcken, Bis-(1-hydroxy-2-ethyl-hexyloxy)adipinsäureester, Bis-(1-hydroxy-2-ethyl-hexyloxy)bernsteinsäureester,
- modifizierte native Öle, z. B. epoxydiertes Sojaöl, hydriertes und alkoxyliertes Ricinusöl, gespaltene und alkoxylierte Öle wie Rapsöl oder Sojaöl, oxidierte und alkoxylierte native Öle wie Rapsöl oder Sojaöl,
- Lactame wie Caprolactam.

So kann z.B. ein Polyester oder Polyestergemisch der Molmasse 40.000 bis 200.000 in einem Diol, einem Diolgemisch, einem Gemisch aus Diolen und Triolen, einem Mono- und/oder Oligoester, einem Gemisch aus Diolen und nativen Ölen, einem Gemisch aus Diolen und modifizierten nativen Ölen und/oder einem Gemisch aus Diolen, Oligoesterolen und nativen Ölen ggf. unter Hinzufügung von metallorganischen Verbindungen und/oder Metallsalzen als Katalysatoren für die Umesterungsreaktion unter Erwärmen auf Temperaturen von 200 bis 270°C gezielt bei Einhaltung definierter Bedingungen zu einheitlichen Oligoestern der Molmasse 250 bis 2000 gespalten werden. Beispielsweise wird ein Polybutylenterephthalat der Molmasse 68.000 in einem Überschuss Diethylenglykol innerhalb von acht Stunden bei 230 bis 250°C unter Abdestillieren von Butan-1,4-diol zu einem im Wesentlichen aus Bis-(2-hydroxyethoxy-terephthalat) und dem überschüssigen Diethylenglykol als Interkalationsmittel bestehenden Sol umgesetzt.

Alternativ kann ein partiell kristalliner Oligoester hergestellt werden, indem durch Umsetzung eines stöchiometrischen Überschusses eines Diols und/oder Triols mit einer oder mehreren Dicarbonsäuren in diesem oder in einem Oligoester oder einem Hydroxyetherester ggf. in Gegenwart metallorganischer Verbindungen die Molmasse des Oligoesters auf maximal 2000 eingestellt wird. So kann z. B. ein Bis-(ω-hydroxylalkyl-adipinat) durch Umsetzung von Adipinsäure in einem Überschuss eines Alkylendiols, z. B. Butan-1,4-diol, in Gegenwart von Dibutylzinndiacetat innerhalb von 3 Stunden bei einer Temperatur von 170 bis 180°C als Sol hergestellt werden.

Diole sind z. B. Diethylenglykol, Triethylenglykol, Tetraethylenglykol, Pentaethylenglykol, Hexaethylenglykol, höheren Ethylenglykolen oder deren Gemische.

Triole sind z. B. Glycerin, Octantriol-1,3,8, Hexantriol-1,3,6 oder ihren Homologen, Trimethylolpropan, Glycerin-Propylenoxid-Addukte der Molmasse 260 bis 800.

Dicarbonsäuren sind z. B. Adipinsäure, Sebacinsäure, Azelainsäure, Phthalsäure, Isophthalsäure, Terephthalsäure, Naphthylen-1,5-dicarbonsäure.

Oligoester sind z. B. einfache Kondensate aus einer der o. g. Dicarbonsäuren und einem der o. g. Diole mit 2 bis 8 wiederkehrenden Struktureinheiten mit Molmassen bis zu 1000.

Hydroxyetherester sind solche Oligoester, die unter Verwendung von niederen Homologen des Ethylenglykols oder Propylenglykols mit Molmassen bis 600 hergestellt wurden.

Metallorganische Verbindungen sind z. B. Verbindungen des Zinns wie Zinndioctoat, Dibutylzinndilaurat, Dibutylzinndiacetat, Bis-(tributylzinn)oxid, Titantetrabutylat, Antimontributylat, Germaniumtetrabutylat.

Die Umsetzung kann vorzugsweise in einem beheizbaren Edelstahlreaktor, Extruder, Reaktionsextruder und Mischerkneter erfolgen. Bevorzugt kann die Umsetzung auch als Einschrittverfahren in einem temperierbaren Reaktor durchgeführt werden. Zusammenfassend ist festzustellen, dass erfindungsgemäß reaktive Sole umfassend organische solvatisierte, funktionalisierte, d. h. gegenüber anderen Verbindungen reaktive, Partikel in einem Interkalationsmittel bereitgestellt werden. Diese haben den großen Vorteil, dass einerseits das Entstehen von Aggregaten der Partikel vermieden wird, jedoch andererseits möglichst kleine Teilchen mit einer engen Verteilung als Sol gebildet werden.

Es werden Polymerlösungen als reaktive Sole zur Verfügung gestellt, die den Vorteil haben, dass damit Matrixpolymere bereitgestellt werden können, die ein breites Eigenschaftsspektrum besitzen können und deshalb vielfältig verwendbar sind. Bekanntermaßen steht die Wirkung von festen Additiven im umgekehrten Verhältnis zu ihrer Teilchengröße, d. h. je kleiner die Teilchen desto größer ihre Wirkung auf das Eigenschaftsspektrum des Matrixpolymeren. Demzufolge besteht ein Bedarf an solchen, möglichst kleinen Teilchen in einer für die Materialherstellung geeigneten Form.

Somit können die reaktiven Sole je nach Bedarf zur Herstellung von polymeren Beschichtungsmitteln, Klebstoffen, Elastomeren, Vergussmassen oder Formstoffen Verwendung finden.

Weitere Verwendungsmöglichkeiten sind z. B. bei der Herstellung von Schaumstoffen, zelligen Elastomeren, Beschichtungen, Formgedächtnispolymeren, Kompositen, Verbundmaterialien, Mehrschichtmaterial, Elementen medizinischer Geräte, Prothetik und Elementen von Rehageräten gegeben.

### Ausführungsbeispiele

### Beispiel 1

### Synthese des Vorprodukts (1. Stufe)

In einen 10 l doppelwandigen Edelstahlreaktor mit Rührer, Beheizung mit Thermalöl, Dosierungen für Flüssigkeiten und Feststoffe, Stickstoffeinleitung und Wärmetauscher werden 2,5 kg 4,4'-Diphenylmethandiisocyanat (Schuppenform) gegeben, auf 45°C erwärmt und aufgeschmolzen. Zu dem flüssigen Isocyanat werden langsam 5,5 kg Polypropylenglykol MG 1100 (z.B. Lupranol® 1100, Elastogran AG) unter Rühren zugegeben, so dass die Temperatur 55°C nicht übersteigt. Das Gemisch wird anschließend bei 46°C noch ca. 1 h gerührt. Es entsteht ein homogenes, zähfließendes, gelbliches Produkt mit dem Isocyanatgehalt 5,32 %.

### Umsetzung des Vorproduktes (2.Stufe)

In einen 20 l Edelstahlreaktor mit Rührer, Beheizung mit Thermalöl, Dosierungen für Flüssigkeiten und Feststoffe, Stickstoffeinleitung und Wärmetauscher werden 3,2 kg Dipropylenglykol, 0,8 kg Diethylentriamin und 0,5 kg Di-n-butylamin eingewogen und dieses Gemisch unter Rühren auf 160°C erwärmt. Innerhalb von 40 Minuten werden 5,5 kg des oben hergestellten Vorprodukts zugegeben. Nach beendeter Zugabe wird das Gemisch bei 180°C weitere 45 min gerührt. Das Reaktionsgemisch wird mittels eines Bodenventils abgelassen. Es ist homogen, leicht fließend, braun-orange und klar. Das reaktive Sol enthält 31,4% Oligoharnstoffe mit Aminendgruppen. Die Bestimmung der Teilchengröße von aminfunktionellen Oligoharnstoffen im reaktiven Sol mittels Nanophox® (Sympatec GmbH, PCCS) ergab das Maximum der Verteilungskurve bei 12nm und die Verteilung von 10 bis 14 nm. Das reaktive Sol weist eine Hydroxylzahl von 410 mg KOH/g, eine Aminzahl von 92 mg KOH/g und eine Viskosität (Rotation) von 720 mPas (25°C) auf.

Das reaktive Sol wird mit polymerem 4,4'-Dphenylmethandiisocyanat (p-MDI, Lupranat® M20S der BASF SE) zu einer Beschichtung von 2 mm Stärke verarbeitet. Dem reaktiven Sol werden vor der Mischung mit p-MDI 1 % synthetisches Natriumaluminiumsilikat (NAS) und 0,5 % Acetylaceton zugesetzt. Damit ist das Mischungsverhältnis von reaktivem Sol zu p-MDI wie 100 : 119. Es wird eine sehr glatte Schicht erhalten mit einer Shore-D-Härte von 80 und einer Glasübergangstemperatur (DSC) von 126°C.

### Beispiel 2

Das im Beispiel 1 beschriebene Verfahren wird als kontinuierliches Verfahren mittels eines Reaktionsextruders durchgeführt.

Dabei erfolgt zunächst die Synthese des Vorproduktes unter gleichmäßiger Dosierung und Mischung des aufgeschmolzenen Diisocyanats und des Diols (molares Verhältnis 2: 1) mit 5,0 kg 4,4'-Diphenylmethandiisocyanat und 11,0 kg Polypropylenglykol MG 1100 (z.B. Lupranol® 1100, Elastogran AG,) pro Stunde bei 45°C bis 70°C (Temperaturgradient) im vorderen Teil des Extruders.

Die Umsetzung des entstandenen Vorproduktes erfolgt direkt im Anschluß im zweiten Teil des Extruders (Heizzonen 4 bis 8) bei 180°C unter Dosierung des vorgemischten Solvolysegemisches (32 Teile Dipropylenglykol, 8 Teile Diethylentriamin und 5 Teile Din-butyl-amin).

Das Produkt ist homogen, fließfähig, braun-orange und klar. Das reaktive Sol enthält 31,4% Oligoharnstoffe. Die Bestimmung der Teilchengröße von aminfunktionellen Oligoharnstoffen im reaktiven Sol mittels Nanophox® (Sympatec GmbH, PCCS) ergab das Maximum der Verteilungskurve bei 12 nm und die Verteilung von 10 bis 14 nm. Das reaktive Sol weist eine Hydroxylzahl von 425 mg KOH/g, eine Aminzahl von 95 mg KOH/g und eine Viskosität (Rotation) von 720 mPas (25°C) auf.

Das reaktive Sol wird mit polymerem 4,4'-Dphenylmethandiisocyanat (p-MDI, Lupranat® M20S der BASF SE) zu einer Beschichtung von 2 mm Stärke verarbeitet. Dem reaktiven Sol werden vor der Mischung mit p-MDI 1 % synthetisches Natriumaluminiumsilikat (NAS) und 0,5 % Acetylaceton zugesetzt. Damit ist das Mischungsverhältnis von reaktivem Sol zu p-MDI wie 100 : 117,5. Es wird eine sehr glatte Schicht erhalten mit einer Shore-D-Härte von 85 und einer Glasübergangstemperatur (DSC) von 102°C.

### Beispiel 3

### Synthese des Vorprodukts

In einen 10 l Edelstahlreaktor mit Rührer, Beheizung mit Thermalöl, Dosierungen für Flüssigkeiten und Feststoffe, Stickstoffeinleitung und Wärmetauscher werden 2,7 kg 4,4'-Dicyclohexylmethandiisocyanat auf 45°C erwärmt und in dieses langsam unter Rühren 5 kg PTMO 1000 (ca. 1,5 Stunden) gegeben, so dass die Temperatur 75°C nicht übersteigt. Das Gemisch wird anschließend bei 60°C ca. 1 h gerührt. Es entsteht ein homogenes, zähfließendes, gelbliches Produkt mit einem Isocyanatgehalt von 5,5 %.

### Umsetzung des Vorproduktes

5,5 kg dieses Vorproduktes werden über eine Bodenablassleitung direkt in einen 20 I Edelstahlreaktor mit Rührer, Beheizung mit Thermalöl, Stickstoffeinleitung und Wärmetauscher mit einem auf 120°C erwärmten Gemisch von 3,2 kg Dipropylenglykol, 0,9 kg Dipropylentriamin und 0,5 kg Di-n-butylamin gegeben und nach vollständiger Zugabe dieses Gemisch unter Rühren auf 180°C erwärmt. Bei 180°C wird 30 Minuten weiter gerührt, danach wird das Reaktionsgemisch mittels eines Bodenventils abgelassen. Es ist homogen, fließend und klar. Das reaktive Sol enthält 19,2 % aminfunktionelle Oligoharnstoffe. Die Bestimmung der Teilchengröße von aminfunktionellen Oligoharnstoffen im reaktiven Sol mittels Zetasizer (Malvern) ergab das Maximum der Verteilungskurve bei 11 nm. Das reaktive Sol weist eine Hydroxylzahl von 340 mg KOH/g, eine Aminzahl von 92 mg KOH/g und eine Viskosität (Rotation) von 400 mPas (25°C) auf.

Das reaktive Sol wird mit polymerem 4,4'-Dphenylmethandiisocyanat (p-MDI, Lupranat® M20S der BASF SE) zu einer Beschichtung von 2 mm Stärke verarbeitet. Dem reaktiven Sol werden vor der Mischung mit p-MDI 1 % synthetisches Natriumaluminiumsilikat (NAS) und 0,5 % Acetylaceton zugesetzt. Damit ist das Mischungsverhältnis von reaktivem Sol zu p-MDI wie 100 : 101. Es wird eine sehr glatte Schicht erhalten mit einer Shore-D-Härte von 70 und einer Glasübergangstemperatur (DSC) von 96°C.

### Beispiel 4

### Synthese des Vorprodukts

In einen 10 I doppelwandigen Edelstahlreaktor mit Rührer, Beheizung mit Thermalöl, Dosierungen für Flüssigkeiten und Feststoffe, Stickstoffeinleitung und Wärmetauscher werden 5 kg 4,4'-Diphenylmethandiisocyanat (Schuppenform) gegeben, auf 45°C erwärmt und aufgeschmolzen. Zu dem flüssigen Isocyanat werden langsam 4,5 kg Polypropylenglykol MG 450 (z.B. Lupranol® 1200, BASF SE) unter Rühren zugegeben, so dass die Temperatur 55°C nicht übersteigt. Das Gemisch wird anschließend bei 46°C noch ca. 1 h gerührt. Es entsteht ein homogenes, zähfließendes, gelbliches Produkt mit dem Isocyanatgehalt 6,8 %.

### Umsetzung des Vorproduktes

In einen 20 I Edelstahlreaktor mit Rührer, Beheizung mit Thermalöl, Dosierungen für Flüssigkeiten und Feststoffe, Stickstoffeinleitung und Wärmetauscher werden 2,1 kg Dipropylenglykol, 1,5 kg Diethylentriamin und 0,4 kg Di-n-butylamin und 1 kg Butandiol 1,4 eingewogen und dieses Gemisch unter Rühren auf 160°C erwärmt. Innerhalb von 40 Minuten werden 5 kg des oben hergestellten Vorprodukts zugegeben. Nach beendeter Zugabe wird das Gemisch bei 180°C weitere 45 min gerührt. Das Reaktionsgemisch wird mittels eines Bodenventils abgelassen. Es ist homogen, leicht fließend, gelb und klar. Das reaktive Sol enthält ca. 50% Oligoharnstoffe mit Aminendgruppen. Die Bestimmung der Teilchengröße von aminfunktionellen Oligoharnstoffen im reaktiven Sol mittels Zetasizer (Malvern) ergab das Maximum der Verteilungskurve bei 3,5 nm und die Verteilung von 2 bis 6 nm. Das reaktive Sol weist eine Hydroxylzahl von 568 mg KOH/g, eine Aminzahl von 187 mg KOH/g und eine Viskosität (Rotation) von 909 mPas (25°C) auf.

Das reaktive Sol wird mit polymerem 4,4'-Dphenylmethandiisocyanat (p-MDI, Lupranat® M20S der BASF SE) zu einer Beschichtung von 2 mm Stärke verarbeitet. Dem reaktiven Sol werden vor der Mischung mit p-MDI 1 % synthetisches Natriumaluminiumsilikat (NAS) und 0,5 % Acetylaceton zugesetzt. Damit ist das Mischungsverhältnis von reaktivem Sol zu p-MDI wie 100 : 133. Es wird eine sehr glatte Schicht erhalten mit einer Shore-D-Härte von 82 und einer Glasübergangstemperatur (DSC) von 132°C.

### Beispiel 5

### Synthese des Vorprodukts

In einen 10 I Edelstahlreaktor mit Rührer, Beheizung mit Thermalöl, Dosierungen für Flüssigkeiten und Feststoffe, Stickstoffeinleitung und Wärmetauscherwerden 3,0 kg 4,4'-Diphenylmethandiisocyanat (Schuppenform) auf 45°C erwärmt und dabei aufgeschmolzen und dieses langsam unter Rühren mit 3,9 kg PolyTHF 650 S vermischt, so dass die Reaktionstemperatur 60°C nicht übersteigt. Das Gemisch wird anschließend bei 55°C ca. 1 h gerührt. Es entsteht ein homogenes, zähfließendes, gelbliches, leicht trübes Produkt mit einem Isocyanatgehalt von 7,0 %.

### Umsetzung des Vorproduktes

In einen 20 l Edelstahlreaktor mit Rührer, Beheizung mit Thermalöl, Dosierungen für Flüssigkeiten und Feststoffe, Stickstoffeinleitung und Wärmetauscher werden 2,0 kg Dipropylenglykol, 1,2 kg Diethylenglykol, 0,9 kg Bis-N,N-(2-aminopropyl)methylamin und 0,5 kg Di-n-butylamin eingewogen und dieses Gemisch unter Rühren auf 160°C erwärmt. Innerhalb von 60 Minuten werden 5,5 kg des oben hergestellten Vorproduktes zugegeben. Nach beendeter Zugabe wird das Gemisch bei 180°C weitere 30 min gerührt. Das Reaktionsgemisch wird mittels eines Bodenventils abgelassen. Es ist homogen, fließend und bei 35°C klar. Das reaktive Sol enthält 24,2% aminfunktionelle Oligoharnstoffe. Die Bestimmung der Teilchengröße von aminfunktionellen Oligoharnstoffen im reaktiven Sol mittels Zetasizer (Malvern) ergab das Maximum der Verteilungskurve bei 5,8 nm. Das reaktive Sol weist eine Hydroxylzahl von 422 mg KOH/g, eine Aminzahl von 127 mg KOH/g und eine Viskosität (Rotation) von 590 mPas (25°C) auf.

Das reaktive Sol wird mit polymerem 4,4'-Dphenylmethandiisocyanat (p-MDI, Lupranat® M20S der BASF SE) zu einer Beschichtung von 2 mm Stärke verarbeitet. Dem reaktiven Sol werden vor der Mischung mit p-MDI 1 % synthetisches Natriumaluminiumsilikat (NAS) und 0,5 % Acetylaceton zugesetzt. Damit ist das Mischungsverhältnis von reaktivem Sol zu p-MDI wie 100 : 128. Es wird eine sehr glatte Schicht erhalten mit einer Shore-D-Härte von 85 und einer Glasübergangstemperatur (DSC) von 122°C.

### Beispiel 6

### Synthese des Vorprodukts

In einen 20 l doppelwandigen Edelstahlreaktor mit Rührer, Beheizung mit Thermalöl, Dosierungen für Flüssigkeiten und Feststoffe, Stickstoffeinleitung und Wärmetauscher werden 5 kg 4,4'-Diphenylmethandiisocyanat (Schuppenform) gegeben, auf 45°C erwärmt und aufgeschmolzen. Zu dem flüssigen Isocyanat werden langsam 6,5 kg Poly-THF 650S (MG 650) unter Rühren zugegeben, so dass die Temperatur 55°C nicht übersteigt. Das Gemisch wird anschließend bei 46°C noch ca. 1h gerührt. Es entsteht ein homogenes, zähfließendes, gelbliches Produkt mit dem Isocyanatgehalt 7 %.

### Umsetzung des Vorproduktes

In einen 20 I Edelstahlreaktor mit Rührer, Beheizung mit Thermalöl, Dosierungen für Flüssigkeiten und Feststoffe, Stickstoffeinleitung und Wärmetauscher werden 3,8 kg Dipropylenglykol, 0,7 kg Diethylentriamin und 1,2 kg Polypropylentriol MG 3100 (Lupranol® 2032, BASF SE) eingewogen und dieses Gemisch unter Rühren auf 160°C erwärmt. Innerhalb von 40 Minuten werden 4,3 kg des oben hergestellten Vorprodukts zugegeben. Nach beendeter Zugabe wird das Gemisch bei 180°C weitere 45 min gerührt. Das Reaktionsgemisch wird mittels eines Bodenventils abgelassen. Es ist homogen, leicht fließend, gelb und klar. Das reaktive Sol enthält 31,4% Oligoharnstoffe mit Aminendgruppen. Die Bestimmung der Teilchengröße von aminfunktionellen Oligoharnstoffen im reaktiven Sol mittels Zetasizer (Malvern) ergab das Maximum der Verteilungskurve bei 5,4nm und die Verteilung von 4 bis 8 nm. Das reaktive Sol weist eine Hydroxylzahl von 416 mg KOH/g, eine Aminzahl von 74 mg KOH/g und eine Viskosität (Rotation) von 1690 mPas (25°C) auf.

Das reaktive Sol wird mit polymerem 4,4'-Dphenylmethandiisocyanat (p-MDI, Lupranat® M20S der BASF SE) zu einer Beschichtung von 2 mm Stärke verarbeitet. Dem reaktiven Sol werden vor der Mischung mit p-MDI 1 % synthetisches Natriumaluminiumsilikat (NAS) und 0,5 % Acetylaceton zugesetzt. Damit ist das Mischungsverhältnis von reaktivem Sol zu p-MDI wie 100 : 114. Es wird eine sehr glatte Schicht erhalten mit einer Shore-D-Härte von 90 und einer Glasübergangstemperatur (DSC) von 132°C.

### Beispiel 7

### Synthese des Vorprodukts

In einen 20 I doppelwandigen Edelstahlreaktor mit Rührer, Beheizung mit Thermalöl, Dosierungen für Flüssigkeiten und Feststoffe, Stickstoffeinleitung und Wärmetauscher werden 5 kg 4,4'-Diphenylmethandiisocyanat (Schuppenform) gegeben, auf 45°C erwärmt und aufgeschmolzen. Zu dem flüssigen Isocyanat werden langsam 6,5 kg Poly-THF 650S (MG 650) unter Rühren zugegeben, so dass die Temperatur 55°C nicht übersteigt. Das Gemisch wird anschließend bei 46°C noch ca. 1 h gerührt. Es entsteht ein homogenes, zähfließendes, gelbliches Produkt mit dem Isocyanatgehalt 7 %.

### Umsetzung des Vorproduktes

In einen 20 I Edelstahlreaktor mit Rührer, Beheizung mit Thermalöl, Dosierungen für Flüssigkeiten und Feststoffe, Stickstoffeinleitung und Wärmetauscher werden 3,7 kg Dipropylenglykol, 1 kg Diethylentriamin 0,4 kg Dibutylamin und 0,9 kg Polypropylenglykol MG 3100 (z.B. Lupranol 2032, Elastogran AG) eingewogen und dieses Gemisch unter Rühren auf 160°C erwärmt. Innerhalb von 40 Minuten werden 4 kg des oben hergestellten Vorprodukts zugegeben. Nach beendeter Zugabe wird das Gemisch bei 180°C weitere 45 min gerührt. Das Reaktionsgemisch wird mittels eines Bodenventils abgelassen. Es ist homogen, leicht fließend, gelb und klar. Das reaktive Sol enthält ca. 27% Oligoharnstoffe mit Aminendgruppen. Die Bestimmung der Teilchengröße von aminfunktionellen Oligoharnstoffen im reaktiven Sol mittels Zetasizer (Malvern) ergab das Maximum der Verteilungskurve bei 25nm und die Verteilung von 14 bis 35nm. Das reaktive Sol weist eine Hydroxylzahl von 445 mg KOH/g, eine Aminzahl von 115 mg KOH/g und eine Viskosität (Rotation) von 1090 mPas (25°C) auf.

Das reaktive Sol wird mit polymerem 4,4'-Dphenylmethandiisocyanat (p-MDI, Lupranat® M20S der BASF SE) zu einer Beschichtung von 2 mm Stärke verarbeitet. Dem reaktiven Sol werden vor der Mischung mit p-MDI 1 % synthetisches Natriumaluminiumsilikat (NAS) und 0,5 % Acetylaceton zugesetzt. Damit ist das Mischungsverhältnis von reaktivem Sol zu p-MDI wie 100 : 130,7. Es wird eine sehr glatte Schicht erhalten mit einer Shore-D-Härte von 88 und einer Glasübergangstemperatur (DSC) von 129°C.

### Beispiel 8

Synthese eines reaktiven Sols, das aminofunktionelle und biofunktionelle Mono- und Oligoharnstoffe aus 4,4'-MDI und N-Aminoethylpiperazin (NAEP) und Diethyltriamin (DETA) enthält, in einem Edelstahlreaktor (Zweistufenverfahren).

### Synthese des Vorprodukts

In einen 10 I doppelwandigen Edelstahlreaktor mit Rührer, Beheizung mit Thermalöl, Dosierungen für Flüssigkeiten und Feststoffe, Stickstoffeinleitung und Wärmetauscher werden 2,5 kg 4,4'-Diphenylmethandiisocyanat (Schuppenform) gegeben, auf 45°C erwärmt und aufgeschmolzen. Zu dem flüssigen Isocyanat werden langsam 5,5 kg Polypropylenglykol MG 1100 (z.B. Lupranol® 1100, Elastogran AG) unter Rühren zugegeben, so dass die Temperatur 55°C nicht übersteigt. Das Gemisch wird anschließend bei 46°C noch ca. 1 h gerührt. Es entsteht ein homogenes, zähfließendes, gelbliches Produkt mit dem Isocyanatgehalt 5,32 %.

### Umsetzung des Vorproduktes

In einen 20 I Edelstahlreaktor mit Rührer, Beheizung mit Thermalöl, Dosierungen für Flüssigkeiten und Feststoffe, Stickstoffeinleitung und Wärmetauscher werden 4,14 kg Dipropylenglykol, 0,37 kg Diethylentriamin und 0,67 kg N-Aminoethylpiperazin (NAEP) eingewogen und dieses Gemisch unter Rühren auf 160°C erwärmt. Innerhalb von 40 Minuten werden 4,82 kg des oben hergestellten Vorprodukts zugegeben. Nach beendeter Zugabe wird das Gemisch bei 180°C weitere 45 min gerührt. Das Reaktionsgemisch wird mittels eines Bodenventils abgelassen. Es ist homogen, leicht fließend, braun-orange und klar. Das reaktive Sol enthält ca. 24% Oligoharnstoffe mit Aminendgruppen. Die Bestimmung der Teilchengröße von aminfunktionellen Oligoharnstoffen im reaktiven Sol mittels Zetasizer (Malvern) ergab das Maximum der Verteilungskurve bei 5,2nm und die Verteilung von 3 bis 8 nm. Das reaktive Sol weist eine Hydroxylzahl von 434 mg KOH/g, eine Aminzahl von 102 mg KOH/g und eine Viskosität (Rotation) von 1860 mPas (25°C) auf.

Das reaktive Sol wird mit polymerem 4,4'-Dphenylmethandiisocyanat (p-MDI, Lupranat® M20S der BASF SE) zu einer Beschichtung von 2 mm Stärke verarbeitet. Dem reaktiven Sol werden vor der Mischung mit p-MDI 1 % synthetisches Natriumaluminiumsilikat (NAS) und 0,5 % Acetylaceton zugesetzt. Damit ist das Mischungsverhältnis von reaktivem Sol zu p-MDI wie 100 : 125. Es wird eine sehr glatte Schicht erhalten mit einer Shore-D-Härte von 83 und einer Glasübergangstemperatur (DSC) von 121°C.

Das reaktive Sol besitzt biozide Wirkung gegen Algen, Daphnien und Bakterien. Es kann zur Herstellung von Beschichtungen mit biozider Wirkung eingesetzt werden. In Wasserbecken von 16 - 22°C und 1 % Blaualgenkultur wurde nach 6 Monaten kein Bewuchs festgestellt; die Beschichtung war unverändert glatt.

### Beispiel 9

### Einstufenverfahren

In einen 20 l doppelwandigen Edelstahlreaktor mit Rührer, Beheizung mit Thermalöl, Dosierungen für Flüssigkeiten und Feststoffe, Stickstoffeinleitung und Wärmetauscher werden 1.5 kg 4,4'-Diphenylmethandiisocyanat (Schuppenform) gegeben, auf 45°C erwärmt und aufgeschmolzen. Zu dem flüssigen Isocyanat wird ein Gemisch aus 3,44 kg Polypropylenglykol MG 1100 (Lupranol® 1100, BASF SE), 4,3 kg DPG und 0,7 kg DETA unter Rühren zugegeben.

Gleichzeitig wird das Gemisch unter Rühren auf 180°C erwärmt und bei dieser Temperatur 30 Minuten gerührt.

Das Reaktionsgemisch wird mittels eines Bodenventils abgelassen. Es ist homogen, leicht fließend, gelblich und optisch klar. Das reaktive Sol enthält ca. 22,6 % Oligoharnstoffe mit Aminendgruppen. Die Bestimmung der Teilchengröße von aminfunktionellen Oligoharnstoffen im reaktiven Sol mittels Nanophox® (Sympatec GmbH, PCCS) ergab das Maximum der Verteilungskurve bei 12 nm und die Verteilung von 8 bis 15 nm. Das reaktive Sol weist eine Hydroxylzahl von 457 mg KOH/g, eine Aminzahl von 78 mg KOH/g und eine Viskosität (Rotation) von 851 mPas (25°C) auf.

Das reaktive Sol kann zur Herstellung von Beschichtungen eingesetzt werden. Das reaktive Sol wird dazu mit polymerem 4,4'-Dphenylmethandiisocyanat (p-MDI, Lupranat® M20S der BASF SE) zu einer Beschichtung von 2 mm Stärke verarbeitet. Dem reaktiven Sol werden vor der Mischung mit p-MDI 1 % synthetisches Natriumaluminiumsilikat (NAS) und 0,5 % Acetylaceton zugesetzt. Damit ist das Mischungsverhältnis von reaktivem Sol zu p-MDI wie 100 : 128. Es wird eine sehr glatte Schicht erhalten mit einer Shore-D-Härte von 87 und einer Glasübergangstemperatur (DSC) von 132°C.

Das reaktive Sol besitzt biozide Wirkung gegen Algen, Daphnien und Bakterien. Es kann zur Herstellung von Beschichtungen mit biozider Wirkung eingesetzt werden. In Wasserbecken von 16 - 22°C und 1 % Blaualgenkultur wurde nach 8 Monaten kein Bewuchs festgestellt; die Beschichtung war unverändert glatt.

### Beispiel 10

In einen 100 l doppelwandigen Edelstahlreaktor mit Propellerrührer, Destillationskolonne mit Wärmetauscher, Stickstoffeinleitung vom Boden des Reaktors, vier Thermosensoren, Zuführung für Flüssigkeiten über eine Dosierpumpe und Einfüllstutzen zur Einfüllung von Feststoffen, der mit Thermalöl über ein externes Heizaggregat beheizt wird, werden 44 kg Diethylenglykol gegeben und auf 150°C erwärmt. Zu dem Diol werden während der Aufheizphase 25 g Dibutylzinndiacetat gegeben. Sobald die Temperatur von 150°C erreicht ist, werden über den Einfüllstutzen innerhalb von 30 Minuten 38,8 kg Terephthalsäuredimethylester (DMT) gegeben. Die Temperatur wird unter Rühren langsam auf 230°C gesteigert, der Stickstoffstrom auf 5 l/min eingestellt und damit Methanol aus dem Reaktionsgemisch abdestilliert. Sobald die Methanolmenge ca. 600 g erreicht hat, wird der Stickstoffstrom auf 10 l/min erhöht und bei 230°C so lange weiter gerührt, bis noch ca. 30 ml Methanol aufgefangen werden. Danach wird während der Abkühlphase noch so lange Stickstoff mit 10 l/min durchgeleitet, bis die Temperatur 120°C erreicht hat. Danach wird über den Bodenablass abgelassen. Man erhält auf diese Weise ein reaktives Sol mit einer Hydroxylzahl von 285 mg KOH/g und einer Viskosität von 28700 mPas (25°C). Bei Partikelgrößen-Untersuchung mittels Nanophox®. (Sympatec GmbH, PCCS) wurden funktionale Partikel mit einem Maximum bei 15 nm und einer Verteilung zwischen 12 und 18 nm gefunden.

Das reaktive Sol wird mit polymerem 4,4'-Dphenylmethandiisocyanat (p-MDI, Lupranat® M20S der BASF SE) zu einem Gießharz (Sealant) in Form einer Platte von 4 mm Stärke verarbeitet. Dem reaktiven Sol werden vor der Mischung mit p-MDI 2 % synthetisches Natriumaluminiumsilikat (NAS) und 0,05 % Dibutylzinndiacetat zugesetzt. Damit ist das Mischungsverhältnis von reaktivem Sol zu p-MDI wie 100 : 66. Es wird eine sehr harte Platte erhalten mit einer Shore-D-Härte von 78 und einer Glasübergangstemperatur (DSC) von 92°C.

### Beispiel 11

Aus 20 kg o-Kresol und 23 l 30%iger Formaldehydlösung werden in Gegenwart von 200 g konzentrierter Salzsäure 25 kg eines niedermolekularen Resols hergestellt. Von dem Wasser werden ca. 12 kg abdestilliert.

In einen 100 l doppelwandigen Edelstahlreaktor mit Propellerrührer, Destillationskolonne mit Wärmetauscher, Stickstoffeinleitung vom Boden des Reaktors, vier Thermosensoren, Zuführung für Flüssigkeiten über eine Dosierpumpe und Einfüllstutzen zur Einfüllung von Feststoffen, der mit Thermalöl über ein externes Heizaggregat beheizt wird, werden 59 kg Polypropylenglykol MG 400 gegeben und unter Rühren auf 85°C erwärmt. Bei dieser Temperatur wird das vorher hergestellte Konzentrat langsam derart zugegeben, dass die Temperatur nicht unter 80°C sinkt. Sobald die Resollösung vollständig zugegeben worden ist, wird unter Rühren die Temperatur langsam auf 110°C gesteigert. Sobald die Destillation des Wassers einsetzt, wird ein Stickstoffstrom von 7,5 l/min durchgeleitet und das Wasser weiter abdestilliert. Wenn die Destillatmenge geringer wird, wird die Temperatur langsam bis auf 125°C erhöht. Sobald 4 I Wasser aufgefangen sind, wird der Stickstoffstrom auf 12 l/min und weiter bis auf 20 l/min erhöht. Wird kein Destillat mehr aufgefangen, wird die Heizung auf Kühlung umgestellt. Bei 65°C wird das Produkt in Behälter abgelassen.

Man erhält ein reaktives Sol mit einer Hydroxylzahl von 195 mg KOH/g und einer Viskosität von 8450 mPas (25°C). Bei Partikelgrößen-Untersuchung mittels Nanophox® (Sympatec GmbH, PCCS) wurden funktionale Partikel mit einem Maximum bei 10 nm gefunden.

Das reaktive Sol wird mit polymerem 4,4'-Dphenylmethandiisocyanat (p-MDI, Lupranat® M20S der BASF SE) zu einem Gießharz (Sealant) in Form einer Platte von 4 mm Stärke verarbeitet. Dem reaktiven Sol werden vor der Mischung mit p-MDI 2 % synthetisches Natriumaluminiumsilikat (NAS) und 0,5 % Dibutylzinndiacetat zugesetzt. Damit ist das Mischungsverhältnis von reaktivem Sol zu p-MDI wie 100 : 45. Es wird eine sehr harte Platte erhalten mit einer Shore-D-Härte von 81 und einer Glasübergangstemperatur (DSC) von 102°C.

### Beispiel 12

### Synthese des Vorprodukts

In einen 10 l doppelwandigen Edelstahlreaktor mit Rührer, Beheizung mit Thermalöl, Dosierungen für Flüssigkeiten und Feststoffe, Stickstoffeinleitung und Wärmetauscher werden 2,5 kg 4,4'-Diphenylmethandiisocyanat (Schuppenform) gegeben, auf 45°C erwärmt und aufgeschmolzen. Zu dem flüssigen Isocyanat werden langsam 5,5 kg Polypropylenglykol MG 1100 (z.B. Lupranol® 1100, Elastogran AG) unter Rühren zugegeben, so dass die Temperatur 55°C nicht übersteigt. Das Gemisch wird anschließend bei 46°C noch ca. 1 h gerührt. Es entsteht ein homogenes, zähfließendes, gelbliches Produkt mit dem Isocyanatgehalt 5,32 %.

### Umsetzung des Vorproduktes

In einen 20 l Edelstahlreaktor mit Rührer, Beheizung mit Thermalöl, Dosierungen für Flüssigkeiten und Feststoffe, Stickstoffeinleitung und Wärmetauscher werden 3,95 kg Dipropylenglykol, 0,83 kg Diethylentriamin und 0,64 kg Tricyclo-Diamin-decan-diamin (TCD) eingewogen und dieses Gemisch unter Rühren auf 160°C erwärmt. Innerhalb von 20 Minuten werden 4,58 kg des oben hergestellten Vorproduktes zugegeben. Nach beendeter Zugabe wird das Gemisch bei 180°C weitere 30 min gerührt. Das Reaktionsgemisch wird mittels eines Bodenventils abgelassen. Es ist homogen, leicht dünnflüssig, gelb und klar. Da reaktive Sol enthält ca. 30% Oligoharnstoffe mit Aminendgruppen. Die Bestimmung der Teilchengröße von aminfunktionellen Oligoharnstoffen im reaktiven Sol mittels Zetasizer (Malvern) ergab das Maximum der Verteilungskurve bei 4,7 nm und die Verteilung von 3 bis 8 nm. Das reaktive Sol weist eine Hydroxylzahl von 496 mg KOH/g, eine Aminzahl von 143 mg KOH/g und eine Viskosität (Rotation) von 707 mPas (25°C) auf.

### Beispiel 13

Synthese eines reaktiven Sols, das aminofunktionelle Mono- und Oligoharnstoffe aus 4,4'-MDI und Diethyltriamin (DETA) und N-Aminoethylpiperazin (NAEP) in Polypropylenglykol MG1100 (z.B. Lupranol® 1100, Elastogran AG) enthält, im Sulfierkolben (Einschrittverfahren).

In einen 250ml Sulfierkolben (Intensivkühler, Stickstoffzuführung und Temperatursensor, Magnetrührer) werden 15,6g 4,4'-Diphenylmethandiisocyanat unter Stickstoffbegasung aufgeschmolzen (47°C) und danach ein Gemisch aus 4g DETA, 6g NAEP, 34,4g Lupranol 1100 und 40g DPG zugesetzt und unter Temperaturerhöhung auf 180°C gerührt. Das Gemisch verfestigt sich zunächst und ergibt nach 30 Min Reaktionszeit ein optisch klares Produkt mit einem Oligoharnstoffgehalt von ca. 23%, einer OHZ von 437, einer Aminzahl von 86 und einer Viskosität (Rotation) von 1850 mPas (25°C).

Das reaktive Sol kann zur Herstellung von Beschichtungen eingesetzt werden. Das reaktive Sol wird dazu mit polymerem 4,4'-Dphenylmethandiisocyanat (p-MDI, Lupranat® M20S der BASF SE) zu einer Beschichtung von 2 mm Stärke verarbeitet. Dem reaktiven Sol werden vor der Mischung mit p-MDI 1 % synthetisches Natriumaluminiumsilikat (NAS) und 0,5 % Acetylaceton zugesetzt. Damit ist das Mischungsverhältnis von reaktivem Sol zu p-MDI wie 100 : 121,5. Es wird eine sehr glatte Schicht erhalten mit einer Shore-D-Härte von 83 und einer Glasübergangstemperatur (DSC) von 121 °C.

Das reaktive Sol besitzt biozide Wirkung gegen Algen, Daphnien und Bakterien. Es kann zur Herstellung von Beschichtungen mit biozider Wirkung eingesetzt werden. In Wasserbecken von 16 - 22°C und 1 % Blaualgenkultur wurde nach 9 Monaten kein Bewuchs festgestellt; die Beschichtung war unverändert glatt.

### Beispiel 14

Synthese eines reaktiven Sols, das aminofunktionelle Mono- und Oligoharnstoffe enthält, aus Vorastar HB 6549 (Caprolacton-Präpolymer (Dow), NCO 16%), Diethyltriamin (DETA) im Sulfierkolben (Einschrittverfahren).

In einen 250ml Sulfierkolben (Intensivkühler, Stickstoffzuführung und Temperatursensor, Magnetrührer) werden 41,1 g DETA unter Rühren auf 160°C erhitzt und unter Rühren 58,9g Vorastar HB 6549 zugesetzt. Nach 60 Min Reaktionszeit bei 180°C entsteht ein gelbes, homogenes, leicht trübes Produkt, das ca. 50% Oligoharnstoffe enthält, mit einer Viskosität von 7420 mPas (25°C), einer OHZ von 548 und einer Aminzahl von 428.

Das Sol kann zur Herstellung von Beschichtungen eingesetzt werden.

### Beispiel 15

Es wird eine Mannichbase hergestellt, indem in einem Rührreaktor von 10 l Inhalt mit Propellerrührer, zwei Dosierpumpen, Stickstoffeinleitung und Thermometer 3,05 kg p-tert.-Butylphenol und 3,1 kg Diethanolamin vorgelegt und auf 40°C erwärmt werden. In das Gemisch werden unter Rühren und Begasung mit Stickstoff 2,85 kg 32%-ige Formaldehydlösung gegeben und eine Stunde bei dieser Temperatur gerührt. Danach wird weitere drei Stunden bei 80°C gerührt. Es wird auf ca. 55 - 60°C abgekühlt und der Druck schrittweise reduziert, um das Wasser zu entfernen. Schließlich wird bei 1 mbar und 55°C vollständig entwässert.

Zur Herstellung des Sols wird diese Methode verändert. Die Reaktion wird wie beschrieben durchgeführt. Jedoch wird die Reaktion ohne den Entwässerungsschritt durchgeführt. Von dem so hergestellten, noch stark wasserhaltigen Produkt, werden vor dem Entwässern 5,3 kg entnommen und mit 2,85 kg eines Polyethertriols auf Basis Glycerin und Propylenoxid (Hydroxylzahl 420 mg KOH/g) versetzt und drei Stunden bei 75 - 80°C gerührt. Danach wird auf ca. 55 - 60°C abgekühlt und der Druck schrittweise reduziert, um das Wasser zu entfernen. Schließlich wird bei 1 mbar und 55°C vollständig entwässert.

Man erhält ein reaktives Sol mit der Hydroxylzahl 492 mg KOH/g und der OH-Funktionalität 3,4 sowie der Viskosität (25°C) von 1450 mPas.

Aus dem reaktiven Sol und 4,4'-Dicyclohexylmethandiisocyanat werden bei einem Äquivalentverhältnis von 1,00 : 1,06 durch Umsetzung bei 80°C im Matis®-LabCoater Folien von 2 mm Stärke hergestellt. Diese weisen eine Shore-D-Härte von 72 und eine Bruchdehnung von 12 % auf. Diese Folien sind Modell für eine sehr harte aber elastische Beschichtung.

### Beispiel 16

Der Ansatz von Beispiel 15 wird wiederholt, jedoch werden 2,25 kg Bisphenol A und 4,5 kg N-Methyl-N,N-bis(i-propylamin) mit Formaldehyd umgesetzt. Das reaktive Sol wird wieder wie in Beispiel 15 hergestellt, indem vor der Entwässerung zu 5,0 kg des Reaktionsprodukts 3,5 kg Dipropylenglykol gegeben werden und weiter wie in Beispiel 15 verfahren wird.

Man erhält ein reaktives Sol mit der Hydroxylzahl 685 mg KOH/g und der OH-Funktionalität 3,0 sowie der Viskosität (25°C) von 1290 mPas.

Aus dem reaktiven Sol und 4,4'-Dicyclohexylmethandiisocyanat werden bei einem Äquivalentverhältnis von 1,00 : 1,06 durch Umsetzung bei 80°C im Matis®-LabCoater Folien von 2 mm Stärke hergestellt. Diese weisen eine Shore-D-Härte von 76 und eine Bruchdehnung von 19 % auf. Diese Folien sind Modell für eine sehr harte aber elastische Beschichtung.

## Patentansprüche

1. Reaktives Sol, enthaltend eine flüssige Phase und nanoskalige Partikel mit funktionellen Gruppen,
**dadurch gekennzeichnet, dass**
die Partikel ein Maximum der Größenverteilung von < 50nm aufweisen und
ein Partikel mindestens ein Monomer und/oder mindestens ein Oligomer mit 2 bis 15 sich wiederholenden Struktureinheiten enthält,
wobei das Monomer und/oder das Oligomer ein Addukt E aus einer Verbindung A, ausgewählt aus einer der Gruppen von Diisocyanaten, Dicarbonsäuren, Diepoxyden und Phenole mit mindestens zwei A-Endgruppen und
einer Verbindung D,
ausgewählt aus einer der Gruppen von Diolen, Triolen, Diaminen, Triaminen, Polyaminen, Aldehyden oder von Gemischen aus diesen Verbindungen mit mindestens zwei D-Endgruppen,
ist,
und die flüssige Phase eine als Interkalationsmittel wirkende Verbindung B, ausgewählt aus
einer der Gruppen von Diolen, Triolen, Polyolen, Diaminen, Triaminen, Polyaminen, Aminoalkoholen und Aldehyden
mit mindestens zwei B-Endgruppen,
enthält,
wobei die A-Endgruppen Carboxyl-, Epoxy-, Isocyanat-, Phenol-gruppen, die B-Endgruppen Hydroxyl-, Amino-, Aldehydgruppen
und die D-Endgruppen Hydroxyl-, Amino-, Aldehydgruppen sind.

2. Reaktives Sol nach Anspruch 1,
**dadurch gekennzeichnet, dass**
das Monomer und/oder das Oligomer Prepolymere sind.

3. Reaktives Sol nach Anspruch 1 oder 2,
**dadurch gekennzeichnet, dass**
es 5-80 Gew.-% Monomer und/oder Oligomer (Addukt E) und
95-20 Gew.-% der als Interkalationsmittel wirkenden Verbindung B enthält.

4. Reaktives Sol nach einem der Ansprüche 1 bis 3,
**dadurch gekennzeichnet, dass**
das Monomer und/oder Oligomer (Addukt E) ausgewählt ist aus der Gruppe bestehend aus hydroxylgruppenfunktionellen (OH), aminogruppenfunktionellen (primär, sekundär, tertiär) und carboxygruppenfunktionellen (COOH) Monomeren und/oder Oligomeren.

5. Reaktives Sol nach einem der Ansprüche 1 bis 4,
**dadurch gekennzeichnet, dass**
die hydroxylgruppenfunktionellen Monomere und/oder Oligomere ausgewählt sind aus Esteralkoholen, Resolen, Resiten, Polyhydroxyalkanoaten oder Oligo(w-hydroxyalkyl)terephthalaten,
die aminogruppenfunktionellen Monomere oder Oligomere ausgewählt sind aus Oligoharnstoffen, Oligoesteramiden oder oligomeren Mannichbasen (ß-Aminoketone),
die carboxygruppenfunktionellen Monomere oder Oligomere ausgewählt sind aus Oligoadipinaten, Oligosebacaten, Oligoazelainaten, Oligosuccinaten, Oligophthalaten, Oligoterephthalaten, Oligoisophthalaten, Oligomesitylaten, Oligohydoxybutyraten, Oligohydroxyvaleraten, Oligohydroxypropionaten.

6. Reaktives Sol nach einem der Ansprüche 1 bis 5,
**dadurch gekennzeichnet, dass**
die als Interkalationsmittel wirkende Verbindung B bis zu einer Konzentration von 80 Gew.-% an Monomeren und/oder Oligomeren (Addukt E) als ein Solvat mit diesen vorliegt.

7. Reaktives Sol nach einem der Ansprüche 1 bis 6,
**dadurch gekennzeichnet, dass**
die als Interkalationsmittel wirkende Verbindung B ausgewählt ist aus Wasser, (mindestens 2 C)-Diolen, Triolen mit einer Molmasse von 92 bis 6000, Diaminen, Triaminen, Polyetheralkoholen, Polyesteralkoholen und/oder Poly(etheresteralkoholen), modifizierten nativen Ölen, Lactamen, Amiden, Thiolen.

8. Reaktives Sol nach einem der Ansprüche 1 bis 7,
**dadurch gekennzeichnet, dass**
mindestens ein organisches Lösungsmittel mit Heteroatomen enthalten ist, das zur Regulierung der Viskosität und des Verlaufs dient.

9. Reaktives Sol nach einem der Ansprüche 1 bis 8,
**dadurch gekennzeichnet, dass**
mindestens ein OH-funktionelles oder NH2-funktionelles Monomer und/oder Oligomer in einem Interkalationsmittel/-gemisch in Form eines oder mehrerer Diole und/oder Triole mit Molmassen zwischen 62 und 6000 enthalten ist.

10. Reaktives Sol nach Anspruch 9,
**dadurch gekennzeichnet, dass**
das OH-funktionelle Monomere und/oder Oligomere ausgewählt ist aus Terephthalaten, Phthalaten, Hydroxyalkanoaten und/oder ω-Hydroxyalkyladipinaten der Molmasse 254 bis 2000, Resolen mit Molmassen zwischen 200 und 10.000 oder Resiten mit Molmassen zwischen 1000 und 10.000.

11. Reaktives Sol nach Anspruch 9,
**dadurch gekennzeichnet, dass**
das NH₂-funktionelle Monomere und/oder Oligomere ausgewählt ist aus aminogruppenhaltigen Oligoharnstoffen oder Mannichbasen mit Molmassen zwischen 200 und 10.000.

12. Reaktives Sol nach einem der Ansprüche 1 bis 8,
**dadurch gekennzeichnet, dass**
ein NH₂-funktionelles Monomeres und/oder Oligomeres in einem Interkalationsmittel oder -gemisch in Form eines oder mehrerer Amine mit Molmassen zwischen 56 und 10.000 und/oder in ω-Amino-polyethern mit Molmassen zwischen 200 und 5000 enthalten ist.

13. Reaktives Sol nach einem der Ansprüche 1 bis 12,
**dadurch gekennzeichnet, dass**
es weiterhin Katalysatoren, Stabilisatoren, Flammschutzmittel, organische Füllstoffe, anorganische Füllstoffe, exfolierte Schichtsilikate sowie nanoskalige Metalloxide, Metallhydroxyde und/oder Metall(oxid-hydroxide) der Erdalkalimetalle, der Erdmetalle, des Zinks, des Indiums, anderer seltener Erdmetalle oder deren Gemische enthält.

14. Reaktives Sol nach einem der Ansprüche 1 bis 13,
**dadurch gekennzeichnet, dass**
mindestens ein Mono- und/oder Oligomer als Nanopartikel mit einer Größe von 2 - 20 nm im Sol vorliegt.

15. Reaktives Sol nach einem der Ansprüche 1 bis 14,
**dadurch gekennzeichnet, dass**
es zusätzlich bis zu 25 % des Oligomeren an einem oder mehreren Monomeren enthält.

16. Verfahren zur Herstellung eines reaktiven Sols durch Umsetzungen von Reaktanden mittels Additions-, Kondensations- oder Substitutionsreaktionen,
**dadurch gekennzeichnet, dass**
eine Verbindung A,
ausgewählt aus einer der Gruppen von Diisocyanaten, Dicarbonsäuren, Diepoxyden und Phenole mit mindestens zwei A-Endgruppen und
eine Verbindung B,
ausgewählt aus einer der Gruppen von Diolen, Triolen, Polyolen, Diaminen, Triaminen, Polyaminen, Aminoalkoholen und Aldehyden mit mindestens zwei B-Endgruppen im Äquivalent-Verhältnis 1:10 bis 10:1 zwischen 0° und 250°C,
zu Monomeren und/oder Oligomeren C von der Art eines Urethans, Urethanharnstoffs, Harnstoffes, Resols, Resits, einer Mannichbase oder eines Esters und
zu der als Überschuss verbleibenden Verbindung A mit den A-Endgruppen oder der Verbindung B mit den B-Endgruppen umgesetzt werden,
wobei die A-Endgruppen Carboxyl-, Epoxy-, Isocyanat-, Phenol-gruppen und
die B-Endgruppen Hydroxyl-, Amino- und Aldehyd-Gruppen sind,
und
gleichzeitig mit oder nach Reaktionsbeginn eine Verbindung D, ausgewählt aus der Gruppe von Diolen, Triolen, Diaminen, Triaminen, Polyaminen, Aldehyden oder von Gemischen aus diesen Verbindungen mit den D-Endgruppen Hydroxyl-, Amino- oder Aldehyd-Gruppen
zwischen 25 und 200°C
mit den Monomeren und/oder Oligomeren C
zu einem Addukt E aus der Verbindung A und der Verbindung D
unter Freisetzung der Verbindung B aus den Monomeren und/oder Oligomeren C mit mindestens zwei B-Endgruppen
umgesetzt wird.

17. Verfahren nach Anspruch 16,
**dadurch gekennzeichnet, dass**
das Verfahren ein-, zwei- oder mehrstufig durchgeführt wird.

18. Verfahren nach Anspruch 16 oder 17,
**dadurch gekennzeichnet, dass**
eine weitere Verbindung F mit mindestens zwei D-Endgruppen Hydroxyl-, Amino-, Phosphat- oder Carboxylgruppen hinzugefügt wird,
wobei beim Einsatz von Oligo- oder Polyestern als Verbindung F ein Diol oder eine Dicarbonsäure,
bei Einsatz von Urethan- bzw. Urethanhamstoff-Monomere und/oder -Oligomere als Verbindung F ein oder mehrere Diole, organische Phosphate, Amine, Diamine, Polyamine, Triole und/oder Thiole,
bei Einsatz von Resolen oder Resiten als Verbindung F ein oder mehrere Diole und/oder Phenole,
bei Einsatz von Mannichbasen als Verbindung F ein oder mehrere Diole, Amine, Diamine, Polyamine und/oder Triole eingesetzt werden.

19. Verfahren nach einem der Ansprüche 16 bis 18,
**dadurch gekennzeichnet, dass**
die Umsetzung in einem Extruder/Reaktionsextruder/ Mischerkneter erfolgt.

20. Verfahren nach einem der Ansprüche 16 bis 19,
**dadurch gekennzeichnet, dass**
die Umsetzung als Einschrittverfahren in einem temperierbaren Reaktor erfolgt.

21. Verwendung eines reaktiven Sols gemäß einem der Ansprüche 1 bis 15 zur Herstellung von polymeren Beschichtungsmitteln, Klebstoffen, Elastomeren, Vergussmassen oder Formstoffen.

22. Verwendung eines reaktiven Sols gemäß einem der Ansprüche 1 bis 15 zur Herstellung von Beschichtungen, Formgedächtnispolymeren, Kompositen, Verbundmaterialien, Mehrschichtmaterial, Elementen medizinischer Geräte, Prothetik und Elementen von Rehageräten.

## Claims

1. A reactive sol containing a liquid phase and nanoscale particles with functional groups,
**characterized in that**
the particles have a maximum size distribution of < 50 nm and
a particle contains at least one monomer and/or at least one oligomer with 2 to 15 repeating structural units,
wherein the monomer and/or the oligomer is an adduct E from a compound A,
selected from one of the groups of diisocyanates, dicarbonic acids, diepoxides and phenols with at least two A-end groups and
a compound D,
selected from one of the groups of diols, triols, diamines, triamines, polyamines, aldehydes or mixtures of these compounds with at least two D-end groups,
and the liquid phase contains a compound B acting as an intercalating agent selected from
one of the groups of diols, triols, polyols, diamines, triamines, polyamines, amino-alcohols and aldehydes
having at least two B-end groups,
wherein the A-end groups are carboxyl, epoxy, isocyanate, phenol groups, the B-end groups are hydroxyl, amino, aldehyde groups
and the D-end groups are hydroxyl, amino, aldehyde groups.

2. The reactive sol according to claim 1,
**characterized in that**
the monomer and/or the oligomer are prepolymers.

3. The reactive sol according to claim 1 or 2, **characterized in that**
it contains 5-80 % by wt monomer and/or oligomer (adduct E) and
95-20 % by wt of the compound B acting as an intercalating agent.

4. The reactive sol according to one of claims 1 to 3,
**characterized in that**
the monomer and/or oligomer (adduct E) is selected from the group comprising hydroxyl group-functional (OH), amino group-functional (primary, secondary, tertiary) and carboxyl group-functional (COOH) monomers and/or oligomers.

5. The reactive sol according to one of claims 1 to 4,
**characterized in that**
the hydroxyl group-functional monomers and/or oligomers are selected from ester alcohols, resoles, resites, polyhydroxyl alcanoates or oligo (ω- hydroxy-alkyl) terephthalates,
the amino group-functional monomers or oligomers are selected from oligo ureas, oligo ester-amides or oligomeric Mannich bases (β-amino ketones),
the carboxyl group-functional monomers or oligomers are selected from oligo-adipinates, oligo-sebacates, oligo-azelainates, oligo-succinates, oligo-phthalates, oligo-terephthalates, oligo-sophthalates, oligo-mesitylates, oligo-hydroxybutyrates, oligo-hydroxyvalerates, oligo-hydroxypropionates.

6. The reactive sol according to one of claims 1 to 5,
**characterized in that**
the compound B acting as an intercalating agent exists in a concentration of 80 % by wt monomers and/or oligomers (adduct E) as a solvate therewith.

7. The reactive sol according to one of claims 1 to 6,
**characterized in that**
the compound B acting as an intercalating agent is selected from water, (at least 2 C)-diols, triols with a molecular mass of 92 to 6000, diamines, triamines, polyether alcohols, polyester alcohols and/or poly(ether ester alcohols), modified native oils, lactams, amides, thiols.

8. The reactive sol according to one of claims 1 to 7,
**characterized in that**
at least one organic solvent with heteroatoms is contained, which is used to regulate the viscosity and course.

9. The reactive sol according to one of claims 1 to 8,
**characterized in that**
at least one OH-functional or NH₂-functional monomer and/or oligomer is contained in an intercalating agent/intercalating mixture in the form of one or a plurality of diols and/or triols with molecular masses of between 62 and 6000.

10. The reactive sol according to claim 9,
**characterized in that**
the OH-functional monomer and/or oligomer is selected from terephthalates, phthalates, hydroxylalkanoates and/or ω-hydroxyalkyladipinates with a molecular mass of 254 to 2000, resoles with molecular masses of between 200 and 10,000 or resites with molecular masses of between 1000 and 10,000.

11. The reactive sol according to claim 9,
**characterized in that**
the NH₂-functional monomer and/or oligomer are selected from oligo-ureas or Mannich bases molecular masses of between 200 and 10,000.

12. The reactive sol according to one of claims 1 to 8,
**characterized in that**
an NH₂-functional monomer and/or oligomer in an intercalating agent or intercalating mixture is contained in the form of one or a plurality of amines with molecular masses of between 56 and 10,000 and/or in ω-amino-polyethers with molecular masses of between 200 and 5000.

13. The reactive sol according to one of the claims 1 to 12,
**characterized in that**
it furthermore contains catalysts, stabilizers, flame protection means, organic fillers, inorganic filler materials, exfoliated layer silicates and nanoscale metal oxides, metal hydroxides and/or metal (oxide hydroxides) of the earth alkali metals, earth metals, zinc, indium, other rare earth metals and mixtures thereof.

14. The reactive sol according to one of the claims 1 to 13,
**characterized in that**
at least one monomer and/or oligomer is present in the sol as a nanoparticle with a size of 2 - 20 nm.

15. The reactive sol according to one of the claims 1 to 14,
**characterized in that**
in addition it contains up to 25 % of the oligomer in one or a plurality of monomers.

16. A method of manufacturing a reactive sol by converting reactants by means of addition, condensation or substitution reactions,
**characterized in that**
a compound A,
selected from one of the groups of diisocyanates, dicarbonic acids, diepoxides and phenols having at least two A end groups and
a compound B,
selected from one of the groups of diols, triols, polyols, diamines, triamines, polyamines, amino alcohols and aldehydes having at least two B end groups
in the equivalent ratio of 1:10 to 10:1 at between 0 ° and 250 °C,
is converted into monomers and/or oligomers C in the nature of a urethane, urethane urea, urea, resole, resite, a Mannich base or an ester and
into the compound A remaining as excess with the A end groups or the compound B with the B end groups,
wherein the A end groups are carboxyl, epoxy, isocyanate, phenol groups and
the B end groups are hydroxyl, amino and aldehyde groups
and
simultaneously with or after the start of the reaction, a compound D selected from the group of diols, triols, diamines, triamines, polyamines, aldehydes or mixtures of these compounds is converted with the D-end groups hydroxyl, amino or aldehyde groups
at between 25 and 200 °C
with the monomers and/or oligomers C
into an adduct E of the compound A and the compound D,
releasing the compound B from the monomers and/or oligomers C with at least two B end groups.

17. The method according to claim 16,
**characterized in that**
the method is carried out in one, two or multiple stages.

18. The method according to claim 16 or 17,
**characterized in that**
a further compound F with at least two D end groups hydroxyl, amino, phosphate or carboxyl groups is added,
wherein when using oligo esters or polyesters as the compound F, a diol or a dicarbonic acid is used,
when using urethane or urethane urea monomer and/or oligomer as the compound F, one or a plurality of diols, organic phosphates, amines, diamines, polyamines, triols and/or thiols are used,
when using resoles or resites as the compound F, one or a plurality of diols and/or phenols are used,
when using Mannich bases as the compound F, one or a plurality of diols, amines, diamines, polyamines and/or triols is used.

19. The method according to one of claims 16 to 18,
**characterized in that**
the conversion takes place in an extruder/reaction extruder/mixer-kneader.

20. The method according to one of claims 16 to 19,
**characterized in that**
the conversion takes place in a temperature-controllable reactor.

21. Use of a reactive sol according to one of claims 1 to 15 for the production of polymer coating agents, adhesives, elastomers, sealing compounds or moulding materials.

22. Use of a reactive sol according to one of claims 1 to 15 for producing coatings, memory-foam polymers, composites, composite materials, multilayer material, elements of medical equipment, prosthetics and elements of rehabilitation equipment.

## Revendications

1. Sol réactif, contenant une phase liquide et des particules à l'échelle nano pourvues de groupes fonctionnels,
**caractérisé en ce que**
lesdites particules présentent une granulométrie dont le maximum est < 50 nm, et
chaque particule contient au moins un monomère et/ou au moins un oligomère renfermant 2 à 15 unités structurelles répétitives,
ledit monomère et/ou ledit oligomère étant un adduit E constitué d'un composé A,
choisi dans l'un des groupes formés par les diisocyanates, les acides dicarboxyliques, les diépoxydes et les phénols, pourvus d'au moins deux groupements terminaux A, et
d'un composé D,
choisi dans l'un des groupes formés par les diols, les triols, les diamines, les triamines, les polyamines, les aldéhydes et les mélanges desdits composés, pourvus d'au moins deux groupements terminaux D,
et ladite phase liquide contient un composé B agissant comme intercalant, choisi dans
l'un des groupes formés par les diols, les triols, les polyols, les diamines, les triamines, les polyamines, les aminoalcools et les aldéhydes,
pourvus d'au moins deux groupements terminaux B,
les groupements terminaux A étant des groupements carboxyle, époxy, isocyanate, phénol, les groupements terminaux B étant des groupements hydroxyle, amino, aldéhyde,
et les groupements terminaux D étant des groupements hydroxyle, amino, aldéhyde.

2. Sol réactif selon la revendication 1,
**caractérisé en ce que**
ledit monomère et/ou ledit oligomère sont des prépolymères.

3. Sol réactif selon les revendications 1 ou 2,
**caractérisé en ce qu'**il contient
5 à 80 % en poids de monomère et/ou oligomère (adduit E) et
95 à 20 % en poids du composé B agissant comme intercalant.

4. Sol réactif selon l'une des revendications 1 à 3,
**caractérisé en ce que**
ledit monomère et/ou oligomère (adduit E) est choisi dans le groupe constitué de monomères et/ou oligomères ayant des groupes fonctionnels hydroxyle (OH), ayant des groupes fonctionnels amino (primaire, secondaire, tertiaire) ou ayant des groupes fonctionnels carboxyle (COOH).

5. Sol réactif selon l'une des revendications 1 à 4,
**caractérisé en ce que**
les monomères et/ou oligomères ayant des groupes fonctionnels hydroxyle sont choisis parmi les alcools d'ester, les résols, les résites, les alcanoates polyhydroxylés ou les oligo-téréphtalates de ω-hydroxyalkyle,
les monomères et/ou oligomères ayant des groupes fonctionnels amino sont choisis parmi les oligo-urées, les oligo-amides d'ester ou les oligomères de bases de Mannich (β-aminocétones),
les monomères et/ou oligomères ayant des groupes fonctionnels carboxyle sont choisis parmi les oligo-adipinates, les oligo-sebaçates, les oligo-azélaïnates, les oligo-succinates, les oligo-phtalates, les oligo-téréphtalates, les oligo-isophtalates, les oligo-mésitylates, les oligo-hydroxybutyrates, les oligo-hydroxyvalérates, les oligo-hydroxylpropionates.

6. Sol réactif selon l'une des revendications 1 à 5,
**caractérisé en ce que**,
jusqu'à une concentration de 80 % en poids de monomères et/ou oligomère (adduit E), le composé B agissant comme intercalant forme un solvate avec ceux-ci.

7. Sol réactif selon l'une des revendications 1 à 6,
**caractérisé en ce que**
le composé B agissant comme intercalant est choisi parmi l'eau, les diols (renfermant au moins 2 C), les triols ayant une masse moléculaire comprise entre 92 et 6 000, les diamines, les triamines, les alcools de polyéther, les alcools de polyester et/ou les poly(alcools d'éther-ester), les huiles natives modifiées, les lactames, les amides, les thiols.

8. Sol réactif selon l'une des revendications 1 à 7,
**caractérisé en ce qu'**il contient
au moins un solvant organique renfermant des hétéroatomes, lequel sert à réguler la viscosité et le déroulement.

9. Sol réactif selon l'une des revendications 1 à 8,
**caractérisé en ce qu'**il contient
au moins un monomère et/oligomère à fonction OH ou à fonction NH₂, dans un agent/mélange à effet intercalant se présentant sous forme d'un ou de plusieurs diols et/ou triols ayant une masse moléculaire comprise entre 62 et 6 000.

10. Sol réactif selon la revendication 9,
**caractérisé en ce que**
le monomère et/ou oligomère à fonction OH est choisi parmi les téréphtalates, les phtalates, les alcanoates d'hydroxyle et/ou les adipinates de ω-hydroxyalkyle ayant une masse moléculaire comprise entre 254 et 2 000, les résols ayant une masse moléculaire comprise entre 200 et 10 000, ou les résites ayant une masse moléculaire comprise entre 1 000 et 10 000.

11. Sol réactif selon la revendication 9,
**caractérisé en ce que**
le monomère et/ou oligomère à fonction NH₂ est choisi parmi les oligo-urées contenant des groupes amino ou les bases de Mannich ayant une masse moléculaire comprise entre 200 et 10 000.

12. Sol réactif selon l'une des revendications 1 à 8,
**caractérisé en ce qu'**il contient
un monomère et/ou oligomère à fonction NH₂ dans un agent/mélange à effet intercalant se présentant sous forme d'une ou de plusieurs amines ayant une masse moléculaire comprise entre 56 et 10 000 et/ou dans des polyéthers ω-aminés ayant une masse moléculaire comprise entre 200 et 5 000.

13. Sol réactif selon l'une des revendications 1 à 12,
**caractérisé en ce qu'**il contient en outre
des catalyseurs, agents stabilisants, agents ignifuges, charges organiques, charges inorganiques phyllosilicates exfoliés ainsi que des oxydes de métaux, des hydroxydes de métaux et/ou des (oxyde-hydroxydes) de métaux qui sont à l'échelle nano et constituent des dérivés de métaux alcalino-terreux, de métaux terreux, de zinc, d'indium, d'autres métaux terreux rares, ou leurs mélanges.

14. Sol réactif selon l'une des revendications 1 à 13,
**caractérisé en ce que**
ledit sol comporte au moins un mono- et/ou oligomère sous forme de nanoparticules d'une taille de 2 à 20 nm.

15. Sol réactif selon l'une des revendications 1 à 14,
**caractérisé en ce qu'**il contient en outre
un ou plusieurs monomères dans une quantité pouvant représenter jusqu'à 25 % dudit oligomère.

16. Procédé permettant de préparer un sol réactif en faisant réagir les réactifs au moyen de réactions d'addition, de condensation ou de substitution,
**caractérisé en ce que**
l'on fait réagir un composé A,
choisi dans l'un des groupes formés par les diisocyanates, les acides dicarboxyliques, les diépoxydes et les phénols, pourvus d'au moins deux groupements terminaux A, et
un composé B,
choisi dans l'un des groupes formés par les diols, les triols, les polyols, les diamines, les triamines, les polyamines, les aminoalcools et les aldéhydes, pourvus d'au moins deux groupements terminaux B,
dans un rapport d'équivalence allant de 1 : 10 à 10 : 1, entre 0 °C et 250 °C,
pour obtenir des monomères et/ou oligomères C de type uréthane, uréthane-urée, urée, résol, résite, base de Mannich ou ester, et
la quantité excédentaire du composé A pourvu de groupement terminaux A ou du composé B pourvu de groupement terminaux B,
les groupements terminaux A étant des groupements carboxyle, époxy, isocyanate, phénol, et
les groupements terminaux B étant des groupements hydroxyle, amino, aldéhyde,
et
en même temps ou après le début de la réaction, l'on fait réagir un composé D, choisi dans le groupe formés par les diols, les triols, les diamines, les triamines, les polyamines, les aldéhydes ou les mélanges desdits composés, pourvus de groupements terminaux D de type hydroxyle, amino ou aldéhyde,
entre 25 et 200 °C
avec les monomères et/ou oligomères C
pour obtenir un adduit E constitué du composé A et du composé D,
en libérant le composé B à partir de monomères et/ou oligomères C pourvus d'au moins deux groupements terminaux B.

17. Procédé selon la revendication 16,
**caractérisé en ce que**
ledit procédé en mis en oeuvre en une, deux ou plusieurs étapes.

18. Procédé selon les revendications 16 ou 17,
**caractérisé en ce que**
l'on ajoute en outre un composé F pourvu d'au moins deux groupements terminaux D de type hydroxyle, amino, phosphate ou carboxyle,
le composé F étant un diol ou un acide dicarboxylique dans le cas d'une mise en oeuvre d'oligo- ou polyesters,
le composé F étant un ou plusieurs diols, phosphates organiques, amines, diamines, polyamines, triols et/ou thiols dans le cas d'une mise en oeuvre de monomères et/ou oligomères d'uréthane ou d'uréthane-urée,
le composé F étant un ou plusieurs diols et/ou phénols dans le cas d'une mise en oeuvre de résols ou résites,
le composé F étant un ou plusieurs diols, amines, diamines, polyamines et/ou triols dans le cas d'une mise en oeuvre de bases de Mannich.

19. Procédé selon l'une des revendications 16 à 18,
**caractérisé en ce que**
la réaction se déroule dans une extrudeuse / appareil pour extrusion réactive / malaxeur.

20. Procédé selon l'une des revendications 16 à 19,
**caractérisé en ce que**
la réaction se déroule sous forme d'un procédé à étape unique dans un réacteur thermorégulable.

21. Utilisation d'un sol réactif selon l'une des revendications 1 à 15 pour fabriquer des agents de revêtements polymères, des agents adhésifs, des élastomères, des masses à couler ou des matières moulables.

22. Utilisation du sol réactif selon l'une des revendications 1 à 15 pour fabriquer des revêtements, des polymères à mémoire de forme, des composites, des matériaux composites, des matériaux multicouches, des éléments de dispositifs médicaux, des éléments de prothèses et des éléments de dispositifs de rééducation.
